(19) Europäisches Patentamt
European Patent Office
Office européen des brevets

(11) **EP 4 734 602 A1**

(12) **EUROPEAN PATENT APPLICATION**
published in accordance with Art. 153(4) EPC

(43) Date of publication:
**29.04.2026 Bulletin 2026/18**

(21) Application number: **23955163.3**

(22) Date of filing: **12.10.2023**

(51) International Patent Classification (IPC):
**H04W 28/04** (2009.01)

(52) Cooperative Patent Classification (CPC):
**H04W 28/04**

(86) International application number:
**PCT/CN2023/124339**

(87) International publication number:
**WO 2025/076783 (17.04.2025 Gazette 2025/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **GAO, Ning**
**Dongguan, Guangdong 523860 (CN)**
• **LUO, Chaoming**
**Dongguan, Guangdong 523860 (CN)**
• **LI, Yapu**
**Dongguan, Guangdong 523860 (CN)**
• **LU, Liuming**
**Dongguan, Guangdong 523860 (CN)**

(74) Representative: **RGTH
Patentanwälte PartGmbB
Neuer Wall 10
20354 Hamburg (DE)**

(54) **WIRELESS COMMUNICATION METHOD AND COMMUNICATION DEVICE**

(57) Provided are a wireless communication method and a communication device. The method comprises: a first device receiving a first field, wherein the first field is used for instructing the first device to adjust the length of a sent data unit. In the present application, parameters can be provided for the length adjustment of a sent data unit, thereby reducing the probability of interference, thus reducing a packet loss rate, and improving the reliability of a link.

FIG. 8

**Description**

**TECHNICAL FIELD**

This application relates to the field of communications technologies, and more specifically, to a wireless communication method and a communications device.

**BACKGROUND**

A communications device may be subject to interference. For example, the interference may be internal interference or external interference. The interference may affect ongoing transmission or reception of the communications device. Methods for reducing interference in a related technology all have problems.

**SUMMARY**

This application provides a wireless communication method and a communications device. The following describes the aspects related to this application.

According to a first aspect, a wireless communication method is provided, and the method includes: receiving, by a first device, a first field, where the first field is used to instruct the first device to adjust a length of a data unit to be transmitted.

According to a second aspect, a wireless communication method is provided, and the method includes: transmitting, by a second device, a first field to a first device, where the first field is used to instruct the first device to adjust a length of a data unit to be transmitted.

According to a third aspect, a communications device is provided. The communications device is a first device and includes: a receiving unit, configured to receive a first field, where the first field is used to instruct the first device to adjust a length of a data unit to be transmitted.

According to a fourth aspect, a communications device is provided. The communications device is a second device and includes: a transmitting unit, configured to transmit a first field to a first device, where the first field is used to instruct the first device to adjust a length of a data unit to be transmitted.

According to a fifth aspect, a communications device is provided. The communications device includes a processor and a memory. The memory is configured to store one or more computer programs. The processor is configured to invoke the computer program in the memory, to cause the communications device to perform some or all of the steps of a method according to the foregoing aspects.

According to a sixth aspect, an embodiment of this application provides a communications system, and the system includes the foregoing communications device. In another possible design, the system may further include another device that interacts with the communications device in the solutions provided in embodiments of this application.

According to a seventh aspect, an embodiment of this application provides a computer-readable storage medium. The computer-readable storage medium stores a computer program, and the computer program causes a communications device to perform some or all of the steps in a method according to the foregoing aspects.

According to an eighth aspect, an embodiment of this application provides a computer program product. The computer program product includes a non-transitory computer-readable storage medium storing a computer program, and the computer program is operable to cause a communications device to perform some or all of the steps of a method according to the foregoing aspects. In some implementations, the computer program product may be a software installation package.

According to a ninth aspect, an embodiment of this application provides a chip. The chip includes a memory and a processor. The processor may invoke a computer program from the memory and run the computer program, to implement some or all of the steps described in the method according to the foregoing aspects.

The first device may adaptively adjust, based on the first field, the length of the data unit to be transmitted. For example, the first field may instruct the first device to adjust a length of a physical layer service data unit (physical layer service data unit, PSDU), thereby avoiding problems such as retransmission caused by the first device selecting a higher modulation and coding scheme (modulation and coding scheme, MCS) to reduce interference. For another example, the first field may indicate how to adjust the length of the data unit, thereby reducing time required for the first device to determine the length of the data unit to be transmitted for reducing interference, and further accelerating link adjustment to reach optimal (or better) parameters. It can be learned that this application provides a parameter for adjusting the length of the data unit to be transmitted, thereby reducing a probability of interference occurrence, further reducing a packet loss rate, and improving link reliability.

## BRIEF DESCRIPTION OF DRAWINGS

FIG. 1 is a schematic diagram of a wireless communications system to which embodiments of this application are applied.

FIG. 2 is an example diagram of an acknowledgment and retransmission mechanism.

FIG. 3 is an example diagram of a format of a block acknowledgment (block acknowledge, BA) frame.

FIG. 4 is an example diagram of a medium access control (medium access control, MAC) frame.

FIG. 5A is an example diagram of a format of an A-control (A-control) field.

FIG. 5B is an example diagram of a format of a control subfield.

FIG. 5C is an example diagram of a format of control information subfields in a control subfield.

FIG. 6 is a schematic diagram of a scenario with overlapping basic service set (overlapping basic service set, OBSS) interference to which embodiments of this application are applicable.

FIG. 7 is an example diagram of a timing sequence under OBSS interference.

FIG. 8 is a schematic flowchart of a wireless communication method according to an embodiment of this application.

FIG. 9 is a schematic diagram of a format of a BA frame including a BA control field according to an embodiment of this application.

FIG. 10 is a schematic diagram of a format of a compressed BA frame according to an embodiment of this application.

FIG. 11 is an example diagram of a format of a multi-TID BA variant frame according to an embodiment of this application.

FIG. 12 is an example diagram of a format of a multi-STA BA variant frame according to an embodiment of this application.

FIG. 13 is a schematic diagram of a format of a ULA control (ULA control) field according to an embodiment of this application.

FIG. 14 is a schematic diagram of a format of a universal signalling field (universal signal field, U-SIG) field in a physical layer protocol data unit (physical layer protocol data unit, PPDU) according to an embodiment of this application.

FIG. 15 is an example diagram of a timing sequence in which interference is reduced by using a method according to an embodiment of this application.

FIG. 16 is a schematic structural diagram of a communications device according to an embodiment of this application.

FIG. 17 is a schematic structural diagram of another communications device according to an embodiment of this application.

FIG. 18 is a schematic structural diagram of an apparatus used for communication according to an embodiment of this application.

## DESCRIPTION OF EMBODIMENTS

Technical solutions in this application are described below with reference to the accompanying drawings. To facilitate understanding, terms involved in this application are first described.

Communications system

The technical solutions in embodiments of this application may be applied to various communications systems, for example, a wireless local area network (wireless local area networks, WLAN), wireless fidelity (wireless fidelity, WiFi), a high performance radio local area network (high performance radio local area networks, HIPELAN), a wide area network (wide area networks, WAN), a cellular network, or another communications system. For another example, the technical solutions in the embodiments of this application may be applied to a communications systems using the 802.11 standard. For example, the 802.11 standard includes but is not limited to the 802.11ax standard, the 802.11be standard, a subsequent next generation 802.11 standard, or the like.

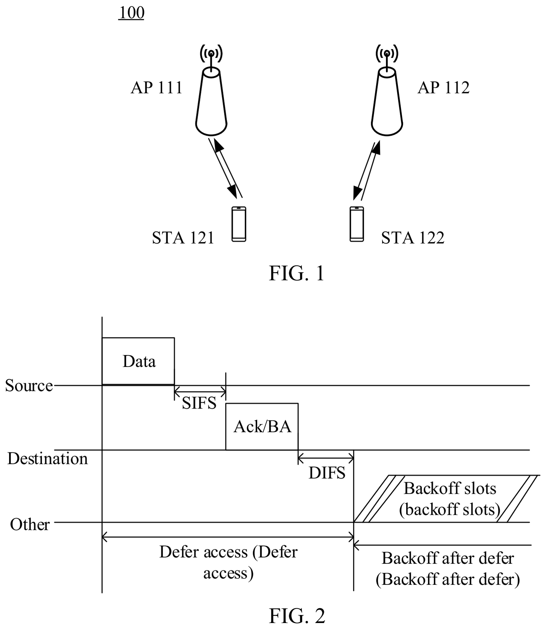

FIG. 1 is a schematic diagram of a communications system to which an embodiment of this application is applicable. With reference to FIG. 1, a communications device in the communications system 100 may include an access point (access point, AP) 111, an AP 112, a station (station, STA) 121, and an STA 122, where the STA 121 may access a network through the AP 111, and the STA 122 may access the network through the AP 112.

In some implementations, a STA may establish an association relationship with one or more APs. Then, the STA and the AP that have an association relationship may communicate with each other. With reference to FIG. 1, the AP 111 and the STA 121 may communicate with each other after an association relationship is established therebetween; and the AP 112 and the STA 122 may communicate with each other after an association relationship is established therebetween.

In some implementations, communication in the communications system 100 may be communication between an AP and a non-AP STA, or may be communication between a non-AP STA and another non-AP STA, or communication between a STA and a peer STA, where the peer STA may refer to a device that performs peer-to-peer communication with the STA, for example, the peer STA may be an AP, or may be a non-AP STA.

It should be understood that FIG. 1 exemplarily shows two AP STAs and two non-AP STAs. Alternatively, the communications system 100 may include more AP STAs, or the communications system 100 may include another quantity of non-AP STAs. This is not limited in embodiments of this application.

In addition, the foregoing communications system may be applied to scenarios of multi-device collaboration, for example, a scenario of multiple-AP (multiple access points, Multi-AP) collaboration, a scenario of multi-station collaboration, or the like.

Names of the AP and/or STA are not limited in embodiments of this application. In some scenarios, an AP may also be referred to as an AP STA. In other words, in a sense, the AP is also a STA. In some other scenarios, a STA may also be referred to as a non-AP STA (non-AP STA).

In some scenarios, the foregoing communications device may alternatively be a "multi-link device (multi-link device, MLD)", namely, a device that performs communication through a plurality of communications links. The plurality of communications links may include communications links of different frequency bands, for example, may include a millimeter-wave frequency band and/or a low frequency band. Generally, if the multi-link device is an AP, the AP may also be referred to as a "multi-link AP"; if the multi-link device is a STA, the STA may also be referred to as a "multi-link STA".

In embodiments of this application, the AP may be a device in a wireless network. The AP may be a communications entity, for example, a communications server, a router, a switch, a network bridge, or the like; or the AP device may include various forms of macro base stations, micro base stations, relay stations, or the like. Certainly, the AP may alternatively be a chip, a circuit, or a processing system in these various forms of devices, to implement a method and a function in embodiments of this application. The AP device may be applied to a variety of scenarios, for example, a sensor node (for example, a smart water meter, a smart electricity meter, or a smart air detection node) in a smart city, a smart device (for example, a smart camera, a projector, a display screen, a TV, a speaker, a refrigerator, a washing machine, or the like) in a smart home, a node in the Internet of things, an entertainment terminal (for example, a wearable device such as AR or VR), a smart device (for example, a printer, a projector, or the like) in a smart office, a vehicle-to-everything device in the Internet of vehicles, infrastructure (for example, a vending machine, a self-service navigation station in a shopping mall or supermarket, a self-service cashier device, or a self-ordering kiosk) in daily life scenarios, or the like.

In some implementations, a role of the STA in the communications system is not fixed. In some scenarios, the STA may serve as an AP. For example, in a scenario in which a mobile phone is connected to a router, the mobile phone may be a non-AP STA; and in a case that the mobile phone serves as a hotspot for another mobile phone, the mobile phone acts as an AP.

In embodiments of this application, a STA device in embodiments of this application may be a device having a wireless transceiver function, for example, may be a device that supports 802.11 series of protocols and may communicate with an AP or another STA. For example, the STA is any communications device of a user that allows the user to communicate with an AP and then communicate with a WLAN. For example, the STA device is: a user equipment (user equipment, UE), a mobile station (mobile station, MS), a mobile terminal (mobile terminal, MT), an access terminal, a subscriber unit, a subscriber station, a mobile site, a mobile station, a remote station, a remote terminal, a mobile device, a user terminal, a terminal, a wireless communications device, a user agent, a user apparatus, or the like.

The STA in embodiments of this application may alternatively be a device providing a user with voice/data connectivity, for example, a handheld device, a vehicle-mounted device, or the like having a wireless connection function. For example, the STA is a mobile phone (mobile phone), a tablet computer, a notebook computer, a palmtop computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved public land mobile network (public land mobile network, PLMN) network, or the like. This is not limited in embodiments of this application.

By way of example rather than limitation, in embodiments of this application, the STA device may alternatively be a wearable device. The wearable device may also be referred to as an intelligent wearable device, and is a general term for wearable devices such as glasses, gloves, watches, clothes, and shoes that are intelligently designed and developed based on daily wearing by using a wearable technology. For example, the wearable device is a smart watch or smart glasses, or a device that focuses on only a specific type of application function and is required to cooperate with another device such as a smart phone for use, for example, various smart bracelets, smart jewelries, or the like for physical sign monitoring.

In addition, in embodiments of this application, the STA device may alternatively be a terminal device in an Internet of things (internet of things, IoT) system. The IoT is an important component of future development of information technologies, and a main technical feature of the IoT is that objects are connected to a network by using a communication technology, to implement an intelligent network of human-computer interconnection and interconnection of things. In embodiments of this application, the IoT technology may implement mass connection, intensive coverage, and terminal power saving by using a narrow band (narrow band, NB) technology or the like.

In addition, in embodiments of this application, the STA device may be a device in a vehicle-to-everything system. Communication methods in the vehicle-to-everything system are collectively referred to as V2X (where X represents everything). For example, the V2X communication includes: vehicle to vehicle (vehicle to vehicle, V2V) communication, vehicle to roadside infrastructure (vehicle to infrastructure, V2I) communication, vehicle to pedestrian (vehicle to pedestrian, V2P) communication, vehicle to network (vehicle to network, V2N) communication, or the like.

In addition, in embodiments of this application, the STA device may further include sensors such as a smart printer, a train detector, a gas station, or the like. Main functions of the device include: data collection (some terminal devices), receiving of control information and downlink data of the AP device, transmitting of an electromagnetic wave, and transmission of data to the AP.

In addition, the AP device in embodiments of this application may be a device for communicating with the STA device. The AP device may be a network device in a wireless local area network. The AP device may be configured to communicate with the STA device through the wireless local area network.

From the perspective of a communication standard supported by an AP, in some implementations, the AP may be a device that supports the 802.11be standard. The AP may alternatively be a device that supports a plurality of current and future WLAN standards of the 802.11 family, such as 802.11ax, 802.11ac, 802.11n, 802.11g, 802.11b, and 802.11a.

From the perspective of a communication standard supported by a STA, in some implementations, the non-AP STA may support the 802.11be standard. The non-AP STA may also support a plurality of current and future wireless local area network (wireless local area networks, WLAN) standards of an 802.11 family, such as 802.11ax, 802.11ac, 802.11n, 802.11g, 802.11b, and 802.11a.

Frequency bands supported in a WLAN technology are not limited in embodiments of this application. In some implementations, the frequency bands supported in the WLAN technology may include but are not limited to a low frequency band (for example, 2.4 GHz, 5 GHz, or 6 GHz) and a high frequency band (for example, 45 GHz or 60 GHz).

It should be understood that specific forms of the STA device and the AP device are not specially limited in embodiments of this application and are merely described as examples

Acknowledgment and retransmission mechanism

The following describes an acknowledgment procedure (acknowledgment procedure) by using a frame that requires immediate acknowledgment.

In a related technology (for example, the 802.11 standard), it is defined that one or more of the following frames require immediate acknowledgment: individually addressed management frames other than Action No Ack frames (Individually addressed Management frames other than Action No Ack frames); individually addressed non-QoS Data frames (Individually addressed non-QoS Data frames); individually addressed QoS Data frames with Normal Ack or Implicit BAR ack policy (Individually addressed QoS Data frames with Normal Ack or Implicit BAR ack policy); BlockAck frames not transmitted in immediate response to A-MPDU (BlockAck frames not sent in immediate response to A-MPDU); BlockAckReq frames (BlockAckReq frames); or PS-Poll frames, which can be acknowledged by generating a data frame (PS-Poll frames, which can be acknowledged by generating a Data frame).

For a frame requiring immediate acknowledgment whose to-distribution-system (to distribution system, To DS) subfield is 1, a STA that receives the frame is required to transmit an acknowledgment (acknowledgment, Ack) frame or a block acknowledgment BA frame after a short interframe space (short interframe space, SIFS) time period, regardless of whether the medium is idle or busy. As shown in FIG. 2, a source (source) transmits a data (data) frame. The data frame is the frame requiring immediate acknowledgment whose To DS subfield is 1. After receiving the data frame, a destination (destination) is required to transmit an Ack frame or a BA frame for acknowledgment after the SIFS time period.

After transmitting a MAC protocol data unit (MAC protocol data unit, MPDU) (for example, an MPDU including the data frame shown in FIG. 2) that requires a response in the form of an Ack frame or a BA frame, the STA (for example, the source in FIG. 2) should start waiting for an acknowledgment timeout (AckTimeout) interval from the PHYTXEND.confirm primitive. A value of the AckTimeout interval is equal to aSIFSTime + aSlotTime + aRxPHYStartDelay. Here, aSIFSTime may denote the SIFS time period; aSlotTime may denote a time period of a slot; and aRxPHYStartDelay may denote a reception physical layer start delay.

If the PHY-RXSTART.indication primitive does not occur during the AckTimeout interval, the STA may determine that the MPDU transmission has failed, and the STA should invoke its backoff (backoff) procedure upon expiration of the AckTimeout interval.

If the PHY-RXSTART.indication primitive occurs during the AckTimeout interval, the STA waits for a corresponding PHY-RXEND.indication primitive to determine whether the MPDU transmission is successful. If the STA identifies a valid Ack frame that corresponds to the PHY-RXEND.indication primitive and that is addressed to the STA, the identification is interpreted as a successful acknowledgment.

If the STA does not identify a valid Ack frame addressed to the STA, this situation should be interpreted that the MPDU transmission has failed. In this case, the STA should invoke its backoff procedure at the PHY-RXEND.indication primitive.

For a distributed coordination function (distributed coordination function, DCF), in a specific case in which a damaged Ack or BA frame is received, the backoff procedure results in the use of an extended inter-frame space (extended inter-frame space, EIFS) after the AckTimeout interval and subsequent reception of the damaged Ack or BA frame, instead of using a distributed inter-frame spacing (distributed inter-frame spacing, DIFS) or arbitration inter-frame space (arbitration inter-frame space, AIFS).

For an enhanced distributed channel access function (enhanced distributed channel access function, EDCAF), if an MPDU transmission in a non-initial PPDU from a transmission opportunity (transmission opportunity, TXOP) holder (holder) fails, the STA may perform a point coordination function inter-frame space (point coordination function inter-frame space, PIFS) recovery or wait for a transmit network allocation vector (transmit network allocation vector, TXNAV) timer to expire and invoke the backoff procedure. How the STA performs selection among these options may depend on implementations.

It should be noted that the PIFS recovery may refer to the following: after a valid response to an initial frame of a TXOP is received, if a duration/identity (duration/ID) field is set to duration corresponding to a plurality of frame exchange sequences and a subsequent transmission failure occurs, the corresponding channel access function may start transmission after the medium becomes idle at a TxPIFS slot boundary indicated by a CS mechanism, provided that a total duration of the transmission, any expected acknowledgment frame, and an applicable IFS is less than a remaining value of a TXNAV timer.

Dynamic fragmentation (dynamic fragmentation)

In a related technology, a procedure of generating non-uniformly segmented MAC service data units (MAC service data unit, MSDU), A-MSDUs, or MMPDUs is defined, where a length of each segment is not necessarily identical. The following describes a segmentation process by using examples.

A length of the first fragment shall be greater than or equal to a minimum fragment size indicated in a minimum fragment size (minimum fragment size) subfield in a capability information (capability information) field (for example, an HE capability information field) in a capability (capability) element (for example, a high efficiency (high efficiency, HE) capability element) transmitted by a recipient STA. If a length of an MSDU, an A-MSDU, or an MMPDU is less than the minimum segment size, the MSDU, the A-MSDU, or the MMPDU shall not be segmented. Fragments generated by dynamic fragmentation may be referred to as dynamic fragments.

The STA (for example, the HE STA) may negotiate the use of different levels of dynamic fragmentation. The level may be, for example, a level 1, a level 2, or a level 3.

Level 1: support for one dynamic fragment that is a non-A-MPDU; and no support for dynamic fragments in an A-MPDU that does not contain an S-MPDU.

Level 2: support for dynamic fragments in an A-MPDU that does not contain an S-MPDU, subject to the following conditions: no more than one dynamic fragment of any given MSDU or A-MSDU in the A-MPDU, and this dynamic fragment is transmitted under a block acknowledgment agreement; and no more than one dynamic fragment of an MMPDU in the A-MPDU.

Level 3: support for dynamic fragments in an A-MPDU that does not contain an S-MPDU, subject to the following conditions: no more than four dynamic fragments of any given MSDU or A-MSDU in the A-MPDU, and these dynamic fragments are transmitted under a block acknowledgment agreement; and no more than one dynamic fragment of an MMPDU in the A-MPDU.

BA frame

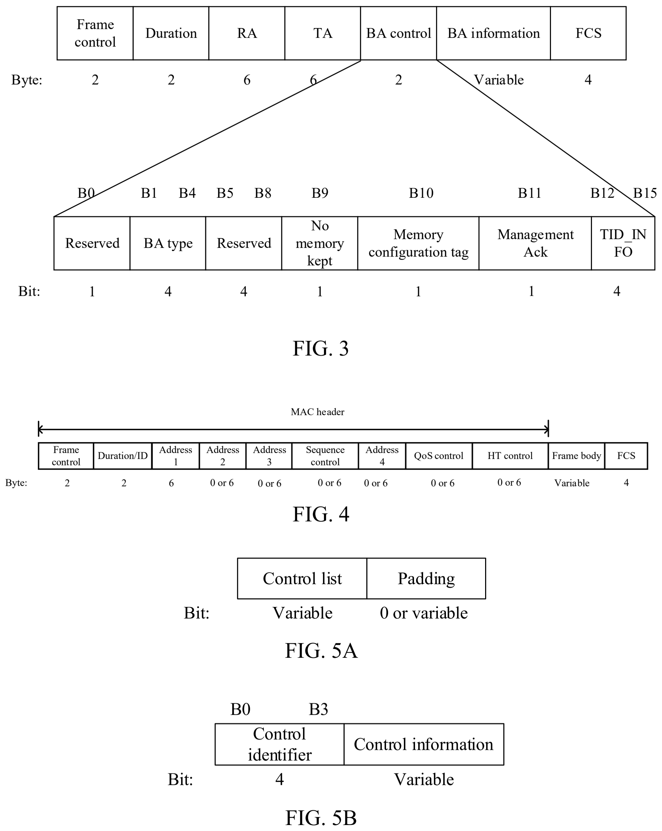

FIG. 3 is an example diagram of a format of a BA frame.

As shown in FIG. 3, the BA frame may include one or more of the following fields: a frame control (frame control) field, a duration (duration) field, a receiver address (receiver address, RA) field, a transmission address (transmission address, TA) field, a BA control (BA control) field, a BA information (BA information) field, or a frame check sequence (frame check sequence, FCS) field. The BA control field may include one or more of the following fields: a reserved (reserved) field, a BA type (BA type) field, a no memory kept (no memory kept) field, a memory configuration tag (memory configuration tag) field, a management acknowledgment (management Ack) field, or a TID information (TID_INFO) field, which are described below.

The frame control field is used to carry basic information such as a frame type.

The duration field is used to indicate remaining duration of a TXOP.

The RA field is used to indicate a MAC address of a receiving station of the frame.

The TA field is used to indicate a MAC address of a transmitting station of the frame.

The BA type field indicates a BA frame variant (BA frame variant) type. For a value and a meaning of the BA type field, reference may be made to Table 1.

Table 1

| BA type value | BA frame variant |
| --- | --- |
| 0 | Reserved (reserved) |
| 1 | Extended compressed (extended compressed) |
| 2 | Compressed (compressed) |
| 3 | Multi-traffic identifier (multi-traffic identifier, multi-TID) |
| 4-5 | Reserved |
| 6 | Groupcast retries (groupcast retries, GCR) |
| 7 | Enhanced directional multi-gigabit (enhanced directional multi-gigabit, EDMG) multi-TID |
| 8 | EDMG compression |
| 9 | Reserved |
| 10 | GLK-GCR |
| 11 | Multi-station (multi-STA) |
| 12-15 | Reserved |

The no memory kept (no memory kept) field, the memory configuration tag (memory configuration tag) field, and the management acknowledgment (management Ack) field are merely used for an EDMG STA. Details are not described herein again.

The TID_INFO field has different meanings in different BA frame variants.

The BA information field has different formats and meanings in different BA frame variants.

A-control (A-control) field

The A-control field may be a high throughput (high throughput, HT) control (HT control) field. To facilitate understanding of the A-control field, an HT control field is first described.

An HT control field may be included in a QoS data (data) frame, a QoS null (null) frame, and a management frame. The presence of the HT control field is controlled by a +HTC subfield in the frame control field.

FIG. 4 is an example diagram of a MAC frame. FIG. 4 shows a possible location of the HT control field in the MAC frame. As shown in FIG. 4, the HT control field is located in a MAC header (MAC header). The MAC frame may further include one or more of the following fields: a frame control field, a duration/ID field, an address 1 (address1) field, an address 2 (address2) field, an address 3 (address3) field, a sequence control (sequence control) field, an address 4 (address4) field, a QoS control (QoS control) field, a frame body (frame bady), or an FCS.

Table 2 shows an example of a format of the HT control field. As shown in Table 2, the A-control field may be an HT control field when both B0 and B1 are set to 1.

Table 2

| Variant | B0 | B1 | B2-B29 | B30 | B31 |
| --- | --- | --- | --- | --- | --- |
| HT | 0 | | HT Control Middle (HT Control Middle) | AC Constraint (AC Constraint) | RGD/More PPDU (More PPDU) |
| Very high-throughput (very high-throughput, VHT) | 1 | 0 | VHT Control Middle (VHT Control Middle) | AC constraint | RGD/More PPDU |

(continued)

| Variant | B0 | B1 | B2-B29 | B30 | B31 |
|---|---|---|---|---|---|
| High-efficiency (high-efficiency, HE) | 1 | 1 | A-control | | |

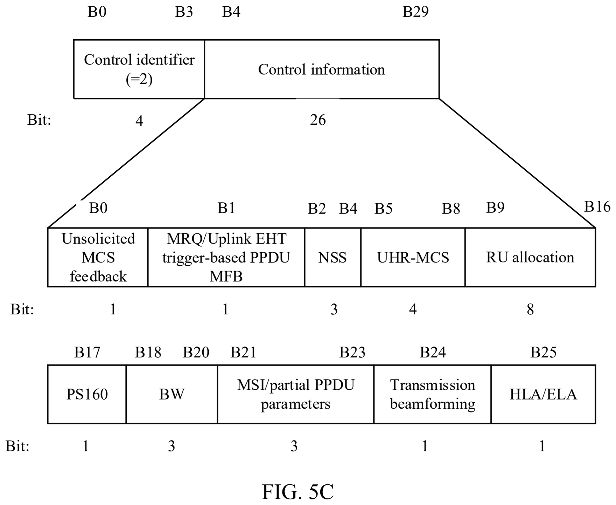

FIG. 5A is an example diagram of a format of the A-control field. As shown in FIG. 5, the A-control field may include one or more of the following fields: a control list (control list) field or a padding (padding) field.

The control list field may include one or more control (control) subfields. FIG. 5B is an example diagram of a format of a control subfield. As shown in FIG. 5B, the control subfield may include one or more of the following subfields: a control identifier (control ID) subfield or a control information (Control information) subfield. The control identifier subfield may indicate a specific type of an A-control subfield. Table 3 exemplarily shows values and meanings of the control identifier subfield.

Table 3

| Control identifier value | Meaning | Length (bits) of the control information subfield |
|---|---|---|
| 0 | Triggered response scheduling (triggered response scheduling, TRS) | 26 |
| 1 | Operating mode (operating mode, OM) | 12 |
| 2 | HE link adaptation (HE link adaptation, HLA)/EHT link adaptation (EHT link adaptation, ELA) | 26 |
| 3 | Buffer status report (buffer status report, BSR) | 26 |
| 4 | Uplink power headroom (UL power headroom, UPH) | 8 |
| 5 | Bandwidth query report (bandwidth query report, BQR) | 10 |
| 6 | Command and status (command and status, CAS) | 8 |
| 7 | EHT operating mode (EHT operating mode, EHT OM) | 6 |
| 8 | Single response scheduling (single response scheduling, SRS) | 10 |
| 9 | AP assistance request (AP assistance request, AAR) | 20 |
| 10-14 | Reserved | |
| 15 | Ones need expansion surely (ones need expansion surely, ONES) | 26 |

It should be noted that the ELA control subfield (whose control identifier value is 2) in Table 3 may include various parameters related to link modulation and transmission schemes, which are used for rapid adaptive control of EHT links. A specific format of the control information subfield in the ELA control subfield may be shown in FIG. 5C.

As shown in FIG. 5C, the control information subfield in the ELA control subfield may include one or more of the following fields: an unsolicited MCS feedback (unsolicited MCS feedback, unsolicited MFB) field, an MCS request (MCS request, MRQ)/uplink EHT trigger-based PPDU MFB (UL EHT TB PPDU MFB) field, a number of spatial streams (number of spatial streams, NSS) field, a UHR-MCS field, a resource unit (resource unit, RU) allocation (RU allocation) field, a PS160 field, a bandwidth (bandwidth, BW) field, an MCS request sequence identifier (MRQ sequence identifier, MSI) or partial PPDU parameters (MSI/partial PPDU parameters) field, a transmission beamforming (TX beamforming) field, a high efficiency link adaptation/extremely high throughput link adaptation (HE link adaptation or EHT link adaptation, HLA/ELA) field, which are described below.

A value 1 of the unsolicited MFB field indicates that the ELA control field is an unsolicited MFB, and a value 0 indicates that the ELA control field is an MRQ or a solicited MFB.

For the MRQ field, when the value of the unsolicited MFB field is 1, the MRQ field may indicate whether the ELA control is a request or a response. For example, a value 1 of the MRQ field may indicate a request for ELA feedback. For another example, a value 0 of the MRQ field may indicate a response to an ELA request.

For the MRQ field, when the value of the unsolicited MFB field is 0, the MRQ field indicates MFBs for different transmission modes. For example, the value 1 of the MRQ field may indicate that the NSS, EHR-MCS, BW, PS160, and RU allocation fields represent a recommended MFB for an EHT TB PPDU transmitted by the station. For another example, the value 0 of the MRQ field may indicate that the NSS, UHR-MCS, BW, PS160, and RU allocation fields represent a recommended MFB for a PPDU transmitted to the STA.

The NSS field may indicate a recommended quantity of spatial streams.

The EHT-MCS field may indicate a recommended MCS used for a PPDU.

The PS160 field may indicate a primary 160-MHz channel or a secondary 160-MHz channel of the RU or multiple resource unit (multiple resource unit, MRU) allocation when a size of the RU or MRU is less than or equal to $2\times996$ subcarriers; or otherwise, the PS160 subfield, together with the RU allocation subfield, indicates an RU or MRU index.

The RU allocation field may be used to indicate an RU or MRU suggested for use.

The BW field may be used to indicate a bandwidth suggested for use.

For the MSI/partial PPDU parameters field, when a value of the unsolicited MFB field is 0, this field may indicate a sequence number of an MFB request. When the value of the unsolicited MFB field is 1, this field may indicate a type and an encoding type of a PPDU.

The transmission beamforming field may indicate whether a fed-back MFB is estimated based on a beamforming-based PPDU. For example, a value 1 of the transmission beamforming field may indicate that the fed-back MFB is estimated based on the beamforming-based PPDU. For another example, a value 0 of the transmission beamforming field may indicate that the fed-back MFB is not estimated based on the beamforming-based PPDU.

The HLA/ELA field may indicate whether the A-control subfield is an HLA field or an ELA field. For example, a value 1 of the HLA/ELA field may indicate an ELA field. For another example, a value 0 of the HLA/ELA field may indicate an HLA field.

Interference

A communications device may be subject to interference. The interference may be internal interference or external interference. A Wi-Fi device is used as an example. Interference that the Wi-Fi device is subject to may be interference within the device, such as interference from Bluetooth and Wi-Fi, or may be external interference, such as interference caused by Wi-Fi multi-link operations or interference caused by other communication technologies.

The interference may affect ongoing transmission or reception of the communications device. For example, the interference may reduce a signal-to-interference-plus-noise ratio (signal to interference plus noise ratio, SINR), causing a failure in data packet reception. Alternatively, the interference may cause a STA to be unable to continue transmitting signals. When a received PPDU is subject to interference resulting in packet loss, a recipient may lose some data packets, and a transmit end may also perform some unnecessary or abnormal operations. Operations at the transmit end, for example, include: triggering a rate selection mechanism, so as to reduce a rate of subsequent transmission. A reason why the transmit end performs these unnecessary or abnormal operations is that a transmitter does not learn that the packet loss is not caused by channel conditions, but rather caused by an accident or infrequent interference.

It is recommended in the related technology to add a signalling indication in a BA frame transmitted as an immediate response to a PPDU transmission, to indicate that the packet loss is mainly caused by abnormal interference suffered during PPDU reception. This allows the transmitter to identify the reason for packet loss and take appropriate measures to handle packet loss. For example, an indication of whether PPDU reception is subject to interference may be a simple 1-bit field. Alternatively, a more advanced approach may be used to more accurately identify an impact of interference when necessary.

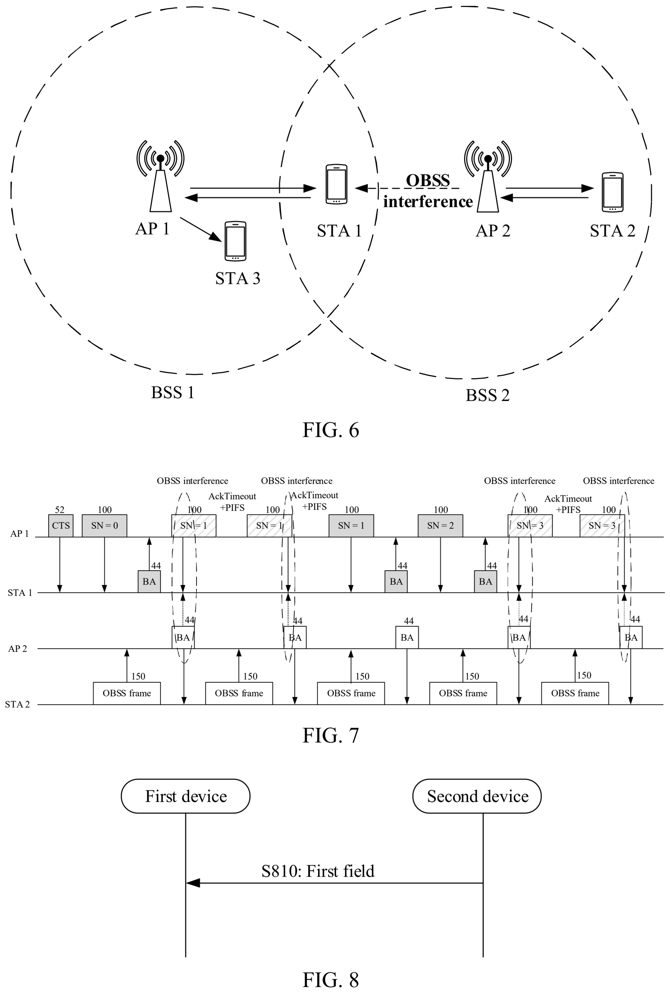

FIG. 6 shows a scenario with two BSSs experiencing OBSS interference. As shown in FIG. 6, a BSS 1 includes an AP 1, a STA 1, and a STA 3, and a BSS 2 includes an AP 2 and a STA 2. Since the STA 1 is located within overlapping coverage of the BSS 1 and the BSS 2, signals transmitted by the AP 2 are considered as OBSS interference to the STA 1.

Since OBSS interference signals are generally also signals compliant with a Wi-Fi protocol, OBSS interference is generally non-continuous interference. FIG. 7 is an example diagram of a timing sequence in which the STA 1 experiences OBSS interference from the AP 2. It can be seen that BA frames transmitted intermittently by the AP 2 overlap with data frames transmitted by the AP 1, thereby causing OBSS interference. As shown in FIG. 7, data frames with SN = 1 and SN = 3 transmitted by the AP 1 to the STA 1 experienced transmission errors and were retransmitted. In other words, the frames transmitted by the AP 1 to the STA 1 intermittently experience errors and are retransmitted. It can be learned that OBSS interference may lead to problems such as a decrease in a transmission success rate, an increase in a packet loss rate, and an increase in an average transmission delay.

Depending on a bandwidth of interference signals relative to normal signals, interference may be classified into narrowband interference and wideband interference. Narrowband interference refers to interference caused by interference signals whose bandwidth is much less than that of the normal signals. Wideband interference refers to interference caused by interference signals whose bandwidth is equal to or greater than that of the normal signals. Methods for handling narrowband interference generally include static puncturing or allocating RUs that are not subject to interference. Methods for handling wideband interference generally include reducing a length of a PPDU or temporarily suspending transmissions.

For wideband interference, as mentioned above, a 1-bit indication is added to the BA frame to indicate whether the received PPDU is affected by interference. However, this method has drawbacks. Based on this method, after a device learns that the device is affected by interference, the device has to try multiple times to adjust the length of the PPDU to an appropriate value, slowing down link adjustment to optimal parameters. In addition, such an indication method is not suitable for stations located at the edge of a BSS. For example, if a transmitting station selects a higher MCS rather than shortening the PSDU in order to reduce the length of the PPDU, a probability of collisions caused by interference may be reduced, but a lower SNR causes PPDU reception failures, resulting in no significant reduction in an overall packet error rate. FIG. 6 is used as an example. Compared with the STA 3 at the center of the BSS, the STA 1 at the edge of the BSS suffers from not only OBSS interference, but also a low SNR of a signal received from the AP 1. Therefore, using a higher MCS for the PPDU transmitted from the AP 1 to the STA 1 may result in reception failures.

In addition, it is mentioned in the related technology that more precise related information for identifying interference such as a period, duty cycle, and frequency of the interference signals, may be indicated in the BA frame. However, this approach incurs significant signalling overheads, because each QoS data frame may correspond to one BA frame. Further, greater signalling overheads may affect communication efficiency.

It can be learned from the above that methods for reducing interference in the related technology all have problems. In view of this, this application provides a wireless communication method shown in FIG. 8, to resolve the foregoing problems.

The method shown in FIG. 8 may be executed by a first device and a second device. The first device may be the AP or non-AP STA described above. The second device may be the AP or non-AP STA described above. The first device may transmit a data unit to the second device to implement communication between the first device and the second device.

The method shown in FIG. 8 may include step S810.

In step S810, the second device transmits a first field to the first device.

The first field may be used to instruct the first device to adjust a length of a data unit to be transmitted. The data unit may include one or more of the following: a PSDU or a PPDU.

The first device adjusting the length of the data unit to be transmitted may include: shortening, by the first device, the length of the data unit to be transmitted. As described above, shortening the length of the data unit to be transmitted may cope with wideband interference.

In some embodiments, the first field may have another name, which is not limited in this application. For example, the first field may also be referred to as a PSDU length reduction (PSDU length reduction) field, a PPDU length reduction (PPDU length reduction) field, a PSDU length (PSDU length) field, a PPDU length (PPDU length) field, or the like.

In some embodiments, the first field may include one or more fields. In a case in which the first field includes a plurality of fields, the plurality of fields may jointly instruct the first device to adjust the length of the data unit to be transmitted.

The first device may adaptively adjust, based on the first field, the length of the data unit to be transmitted. In other words, the first field may provide a suggestion or indication for adjusting the length of the data unit. For example, the first field may indicate that the first device is required to adjust a length of a PSDU, thereby avoiding problems such as retransmission caused by the first device selecting a higher MCS. For another example, the first field may indicate how to adjust the length of the data unit, thereby reducing time required for the first device to determine the length of the data unit, and further accelerating link adjustment to reach optimal (or better) parameters. It can be learned that, in this application, the length of the data unit to be transmitted can be effectively adjusted, thereby reducing a probability of occurrence of interference, further reducing a packet loss rate, and improving link reliability.

In some embodiments, the first field may be used to indicate one or more of the following information: whether to adjust the length of the data unit; or how to adjust the length of the data unit.

In a case in which the first field indicates whether to adjust the length of the data unit, the first field may indicate or suggest whether to adjust the data unit according to a first adjustment scheme. The first adjustment scheme may include, for example, adjusting the length of the data unit to N% of a specific length. N may be a number greater than 0 and less than 100. The specific length may be a length of an original data unit (namely, a historical data unit). For example, the specific length may be a length of a data unit transmitted last time.

In a case in which the first field indicates whether to adjust the length of the data unit, the first field may include a first bit (that is, the first field consists of one bit), and the first bit may be used to indicate whether the first device is required to adjust the length of the data unit to be transmitted. For example, a value 0 of the first bit may indicate that the first device is not required to adjust the length of the data unit to be transmitted; and a value 1 of the first bit may indicate that the first device is required to adjust the length of the data unit to be transmitted. For another example, a value 1 of the first bit may indicate that the first device is not required to adjust the length of the data unit to be transmitted, and a value 0 of the first bit may indicate that the first device is required to adjust the length of the data unit to be transmitted.

It can be learned that, in this application, adjustment of the length of the data unit can be implemented by using fewer bits, thereby reducing communication overheads.

The first field may indicate how to adjust the length of the data unit. In other words, the first field may indicate a scheme for adjusting the length of the data unit. For example, in a case in which the first field indicates how to adjust the length of the data unit, the first field may indicate a first length of the data unit after the adjustment.

For example, the first length may be a maximum length of the data unit. In other words, the first field may indicate a maximum length of the data unit after adjustment. The first device may adjust the length of the data unit such that the length of the data unit is less than or equal to the maximum length.

It should be noted that the first length may alternatively be another length related to the data unit. For example, the first length may be an average length or a minimum length of the data unit.

It should be noted that a manner of indicating the first length is not limited in this application. For example, the first length may be indicated by a data length or a time length. Correspondingly, a unit of the first length may be a unit of data size or a unit of time. For example, the unit of the first length may be bytes. For another example, the unit of the first length may be microseconds.

In a case in which the first field indicates the first length, the first field may also indicate whether the first device is required to adjust the length of the data unit to be transmitted. For example, in a case in which the value of the first field is a specific value, the first field may indicate that the first device is not required to adjust the length of the data unit to be transmitted. In a case in which the value of the first field is not a specific value, the first field may indicate that the first device is required to adjust the length of the data unit to be transmitted, and the first field may indicate the first length. For example, the specific value may be 0. In a case in which the value of the first field is 0, the first field indicates that the first device is not required to adjust the length of the data unit to be transmitted. When the value of the first field is not zero, the value of the first field may indicate the first length.

In some embodiments, the first field may independently indicate the first length. In other words, the first device may determine the first length solely based on the first field. For example, the value of the first field (hereinafter referred to as a first value for ease of description) may be the first length. For another example, the first length may be obtained by calculations based on the first value. For another example, there may be a mapping relationship between the value of the first field and the first length, and the first length may be determined based on the mapping relationship and the first value.

For example, the value of the first field may be denoted as A, and the first length C may satisfy: $C = A$, or $C = 2^{(13+A)} - 1$. For example, the first field may range from 2 bits to 12 bits. A value A ($A \neq 0$) of the first field may indicate maximum duration (in microseconds) of a PPDU to be transmitted by the first device. The value 0 of the first field may indicate that it is unnecessary to adjust the length of the PPDU. For another example, the first field may range from 2 bits to 8 bits. The value A ($A \neq 0$) of the first field may indicate that a length of a PSDU to be transmitted by the first device does not exceed $2^{(13+A)} - 1$ bytes. The value 0 of the first field may indicate that it is unnecessary to adjust the length of the PSDU.

In some embodiments, the first field may be combined with other information to indicate the first length. For example, the first length may be determined based on the first value and a second value.

For example, the first length C may satisfy: $C = \dfrac{B}{2^A}$. The value of the first field is A, and the second value is B.

Based on this application, the first device may not only adjust the length of the data unit to be transmitted according to the indication of the first field, but also adjust the length of the data unit to be transmitted to an appropriate value based on additional information as quickly as possible.

It should be noted that the length of the first field may be between 2 bits and 12 bits. It may be understood that if the value of the first field is equal to the first length, more bits are required in the first field to indicate the first length. In this case, the length of the first field may be, for example, between 2 bits to 12 bits. If the value of the first field is not equal to the first length (for example, if the first length is obtained by calculations based on the value of the first field), the length of the first field may be smaller. In this case, the length of the first field may be, for example, between 2 bits to 8 bits.

It should be noted that the length of the first field may be another value, which is not limited in this application.

The second value may satisfy one or more of the following: the second value being determined based on a value of a second field; the second value being determined based on a value of a static physical layer (physical layer, PHY) characteristic parameter; or the second value being determined based on a length of a data unit historically transmitted by the first device, which are described below.

The second value being determined based on the value of the second field

It may be understood that the first field may be combined with one or more fields to indicate the first length. The one or more fields may include the second field. The one or more fields may be different from the first field.

It should be noted that, the second value may be determined based on the value of the second field, which means that the second field may directly or indirectly indicate the second value. For example, the second value may be the value of the second field. Alternatively, the second value may be obtained by calculations based on the value of the second field.

For example, the second field may be located in a capability (capabilities) element. The capability element may be transmitted by the second device. In other words, the first device may determine the first length based on the first field and capability information of the second device.

For example, the second field may include a maximum aggregate medium access control protocol data unit length exponent (maximum A-MPDU length exponent extension) field. Based on the second field, a maximum A-MPDU length may be determined. The second value may be the maximum A-MPDU length.

In an optional implementation, in a case in which the second field is located in a capability element of a first type, the first length may be a length of a data unit of the first type. The first type may include, for example, one or more of the following: ultra-high reliability (ultra-high reliability, UHR), extremely high throughput (extremely high throughput, EHT), high-efficiency (high-efficiency, HE), very high-throughput (very high-throughput, VHT), or high-throughput (high-throughput, HT). The first device may determine, based on the second field in the capability element of the first type and the first field, how to adjust the length of the data unit of the first type.

For example, the second field may be located in one or more of the following element information transmitted by the second device: a UHR capability element, an EHT capability element, an HE capability element, a VHT capability element, or an HT capability element. If the first device intends to transmit a UHR data unit to the second device, the first device may refer to the second field in the UHR capability element. If the first device intends to transmit an EHT data unit to the second device, the first device may refer to the second field in the EHT capability element; and if the first device intends to transmit an HE data unit to the second device, the first device may refer to the second field in the HE capability element. If the first device intends to transmit a VHT data unit to the second device, the first device may refer to the second field in the VHT capability element. If the first device intends to transmit an HT data unit to the second device, the first device may refer to the second field in the HT capability element.

It may be understood that a value of the second field in the capability element is related to a capability of the second device. Values of the second field in capability elements of different devices may vary. Therefore, based on the second field in the capability element, the first device may adjust, in different manners according to different devices, the length of the data unit to be transmitted, thereby improving timeliness or flexibility of length adjustment of the data unit.

The following describes the second field in detail with reference to Embodiment 1.

Embodiment 1

In Embodiment 1, the first field ranges from 2 bits to 8 bits. The second field may be a Maximum A-MPDU Length Exponent Extension field. A value A (A ≠ 0) of the first field indicates that a station that receives the field is required to adjust a length of a PSDU to be transmitted, such that a length of the PSDU does not exceed $\dfrac{\text{Maximum A}-\text{MPDU length}}{2^A}$ bytes; and a value 0 of the first field indicates that it is unnecessary to adjust the length of the PSDU.

The maximum A-MPDU length may be determined based on the Maximum A-MPDU Length Exponent Extension field. The Maximum A-MPDU Length Exponent Extension field may be located in one or more of the following capability elements transmitted by the second device that transmits the first field: a UHR capability element, an EHT capability element, an HE capability element, a VHT capability element, or an HT capability element.

The Maximum A-MPDU Length Exponent Extension field in the UHR capability element, the EHT capability element, the HE capability element, the VHT capability element, or the HT capability element may indicate a maximum length (in bytes) of A-MPDU that the second device can receive by using one UHR PPDU, one EHT PPDU, one HE PPDU, one VHT PPDU, or one HT PPDU.

If the first device intends to transmit a UHR PPDU to the second device, the first device may refer to the Maximum A-MPDU Length Exponent Extension field in the UHR capability element. If the first device intends to transmit an EHT PPDU, the first device may refer to the Maximum A-MPDU Length Exponent Extension field in the EHT capability element. If the first device intends to transmit an HE PPDU, the first device may refer to the Maximum A-MPDU Length Exponent Extension field in the HE capability element. If the first device intends to transmit a VHT PPDU, the first device may refer to the Maximum A-MPDU Length Exponent Extension field in the VHT capability element. If the first device intends to transmit an HT PPDU, the first device may refer to the Maximum A-MPDU Length Exponent Extension field in the HT capability element.

The second value being determined based on a value of a static physical layer characteristic parameter

The static PHY characteristic parameter may be used to indicate a maximum length of a data unit that a PHY is capable of supporting for reception and/or transmission. For example, the static PHY characteristic parameter may include one or more of the following: a maximum length of a PSDU that the physical layer is capable of supporting for reception and/or transmission, or a maximum length of a PPDU that the physical layer is capable of supporting for reception and/or transmission.

In some embodiments, the static PHY characteristic parameter may include a PSDU maximum length (aPSDUMaxLength) and/or a PPDU maximum time period (aPPDUMaxTime). The aPSDUMaxLength may be used to indicate a maximum length of a PSDU that the PHY is capable of supporting for reception and/or transmission. The aPPDUMaxTime may be used to indicate a maximum length of a PPDU that the PHY is capable of supporting for reception and/or transmission. For example, the first device may determine, based on the aPSDUMaxLength and the first field, a length of a PSDU to be transmitted. For another example, the first device may determine, based on the aPPDUMaxTime and the first field, a length of a PPDU to be transmitted.

It should be noted that the static PHY characteristic parameter may include a static PHY characteristic parameter of a first type. Correspondingly, the first length may be a length of a data unit of the first type. In other words, in a case in which the first device is required to transmit a data unit of the first type, the first device may determine a length of the data unit of the first type based on the static PHY characteristic parameter of the first type.

For example, aPSDUMaxLength may be a static PHY characteristic parameter for a UHR PHY, an EHT PHY, an HE PHY, a VHT PHT, or an HT PHY. The first device may determine a length of a UHR PSDU based on a UHR PHY characteristic parameter aPSDUMaxLength. The first device may determine a length of an EHT PSDU based on an EHT PHY characteristic parameter aPSDUMaxLength. The first device may determine a length of a VHT PSDU based on a VHT PHY characteristic parameter aPSDUMaxLength. The first device may determine a length of an HT PSDU based on an HT PHY characteristic parameter PaSDUMaxLength.

For another example, aPPDUMaxTime may be a static PHY characteristic parameter for a UHR PHY, an EHT PHY, an HE PHY, a VHT PHT, or an HT PHY. The first device may determine a length of a UHR PPDU based on a UHR PHY characteristic parameter aPPDUMaxTime. The first device may determine a length of an EHT PPDU based on an EHT PHY characteristic parameter aPPDUMaxTime. The first device may determine a length of a VHT PPDU based on a VHT PHY characteristic parameter aPPDUMaxTime. The first device may determine a length of an HT PPDU based on an HT PHY characteristic parameter aPPDUMaxTime.

The following provides detailed descriptions with reference to Embodiment 2 and Embodiment 3.

Embodiment 2

In Embodiment 2, the first field ranges from 2 bits to 8 bits. A value A (A ≠ 0) of the first field indicates that the first device is required to adjust a length of a PSDU to be transmitted, such that a length of the PSDU does not exceed $\dfrac{\text{aPSDUMaxLength}}{2^A}$ bytes; and a value 0 of the first field indicates that it is unnecessary to adjust the length of the PSDU. The aPSDUMaxLength is a static PHY characteristic parameter for a UHR PHY, an EHT PHY, an HE PHY, a VHT PHT, or an HT PHY. The aPSDUMaxLength is used to indicate a maximum length of a PSDU that the PHY is capable of supporting for reception and/or transmission.

Embodiment 3

In Embodiment 3, the first field ranges from 2 bits to 8 bits. A value A (A ≠ 0) of the first field indicates that the first device is required to adjust a length of a PPDU to be transmitted, such that a length of the PPDU does not exceed $\dfrac{\text{aPPDUMaxTime}}{2^A}$ bytes; and a value 0 of the first field indicates that it is unnecessary to adjust the length of the PPDU. The aPPDUMaxTime is a static PHY characteristic parameter for a UHR PHY, an EHT PHY, an HE PHY, a VHT PHT, or an HT PHY. The aPPDUMaxTime is used to indicate a maximum length of a PPDU that the PHY is capable of supporting for reception and/or transmission.

The second value being determined based on a length of a data unit historically transmitted by the first device

The data unit historically transmitted may be a data unit transmitted prior to a current instant. For example, the data unit historically transmitted may include a data unit last transmitted.

The following provides detailed descriptions with reference to Embodiment 4 and Embodiment 5.

Embodiment 4

In another embodiment, this field ranges from 2 bits to 8 bits. A value A (A $\neq$ 0) of the field indicates that a station that receives the field is required to adjust a length of a PSDU to be transmitted, such that a length of the PSDU does not exceed $\frac{\text{Length of a PSDU last transmitted}}{2^A}$ bytes; and a value 0 indicates that it is unnecessary to adjust the length of the PSDU.

Embodiment 5

In another embodiment, this field ranges from 2 bits to 8 bits. A value A (A $\neq$ 0) of the field indicates that a station that receives the field is required to adjust a length of a PPDU to be transmitted, such that a length of the PPDU does not exceed $\frac{\text{Length of a PPDU last transmitted}}{2^A}$ bytes; and a value 0 indicates that it is unnecessary to adjust the length of the PPDU.

The first field may belong to a first frame, or may belong to a first PPDU. In other words, the first field may be transmitted in the form of a MAC frame or in the form of a PHY PPDU. The following first describes the first frame.

In some embodiments, the first frame may include one or more of the following: a BA frame, a data frame, a null frame, or a management frame. The data frame may be a QoS data frame. The null frame may be a QoS null frame. The first frame may be a newly added frame, or may be implemented by reusing an existing frame. The first field may be a newly added field in the first frame. Alternatively, the first field may be carried in an existing field of the first frame, that is, the first field may be implemented by reusing an existing field. For example, the first field may be carried in a reserved field in the first frame.

The following provides a description by using an example in which the first frame includes the BA frame.

In some implementations, the first field may belong to a BA control field in the BA frame.

Optionally, a reserved bit in the BA control field may be used to carry the first field. For example, the reserved field B0 in the BA control field shown in FIG. 3 may be used to carry the first field. For another example, the reserved fields B5 to B8 in the BA control field shown in FIG. 3 may be used to carry the first field.

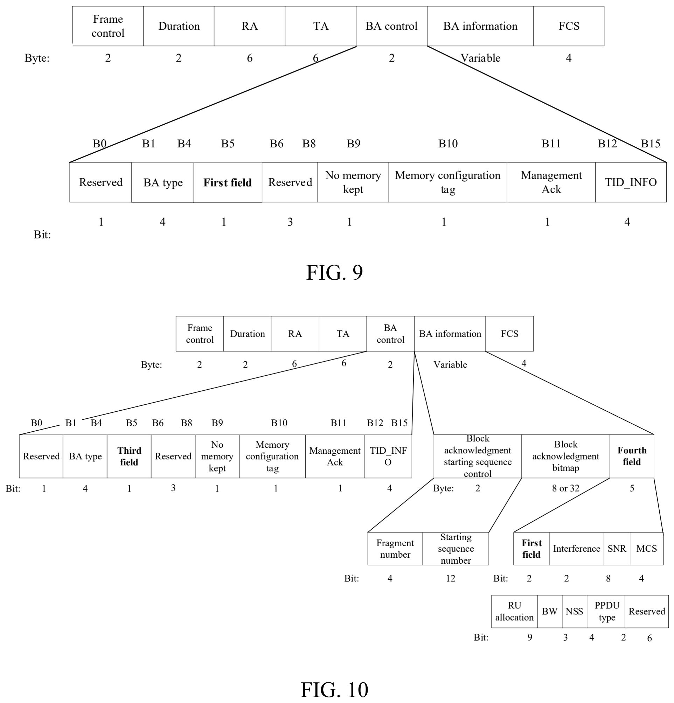

FIG. 9 is a schematic diagram of a format of a BA frame including a BA control field according to an embodiment of this application. As shown in FIG. 9, the first field (represented by a gray-shaded rectangle) may occupy one bit in the BA control field, and is located at B5. As shown in FIG. 9, the BA control field may further include one or more of the following fields: a frame control (frame control) field, a duration (duration) field, an RA field, a TA field, a BA control (BA control) field, a BA information (BA information) field, or an FCS field. The BA control field may include one or more of the following fields: a reserved (reserved) field, a BA type (BA type) field, a no memory kept (no memory kept) field, a memory configuration tag (memory configuration tag) field, or a management acknowledgment (management Ack) field. For descriptions of these fields, reference may be made to the foregoing description related to FIG. 3. Details are not repeated herein.

It should be noted that the location of the first field in FIG. 9 is only an example. The location of the first field may be changed.

In some implementations, the first field may belong to the BA information field in the BA frame.

Optionally, the BA frame may include a third field, and the third field may be used to indicate whether the first field is present in the BA information field. For example, a value 1 of the third field may indicate that the first field is present in the BA information field, and a value 0 of the third field may indicate that the first field is not present in the BA information field. A value 0 of the third field may indicate that the first field is present in the BA information field, and a value 1 of the third field may indicate that the first field is not present in the BA information field.

For example, the third field may be located in the BA control field. For example, the third field may be carried in the reserved field.

In some embodiments, the BA information field may include a fourth field. The first field may be a subfield of the fourth field. In this case, the third field may be used to indicate whether the fourth field is present in the BA information field.

For example, the fourth field may carry one or more types of feedback information. The information carried in the first field may belong to the one or more types of feedback information. For example, the fourth field may carry one or more types of feedback information for a UHR link. Therefore, the fourth field may be referred to as a UHR link feedback (UHR link feedback, ULF) field. Correspondingly, the third field may be referred to as a ULF present (ULF present) field.

In some embodiments, the BA frame may be a compressed BA variant frame, a multi-traffic identifier BA variant frame, or a multi-station BA variant frame.

FIG. 10 is a schematic diagram of a format of a compressed BA frame according to an embodiment of this application. As shown in FIG. 10, the BA control field includes the third field. The BA information field includes the fourth field. The fourth field includes the first field. The fourth field may include one or more of the following fields: an interference (interference) field, a signal-to-noise ratio (signal to noise ratio, SNR) field, an MCS field, an RU allocation (RU allocation) field, a BW field, an NSS field, a PPDU type (PPDU type) field, or a reserved field. The BA information field may further include one or more of the following fields: a block acknowledgment starting sequence control (block Ack starting sequence control) field or a block acknowledgment bitmap (block Ack bitmap) field. The block acknowledgment starting sequence control field may include one or more of the following fields: a fragment number (fragment number) field, or a starting sequence number (starting sequence number) field.

It should be noted that locations of the first field, the third field, and the fourth field in FIG. 10 are merely examples. The locations of the first field, the third field, and the fourth field may be changed. In addition, the presence of the fields in the fourth field and their locations in FIG. 10 may be changed.

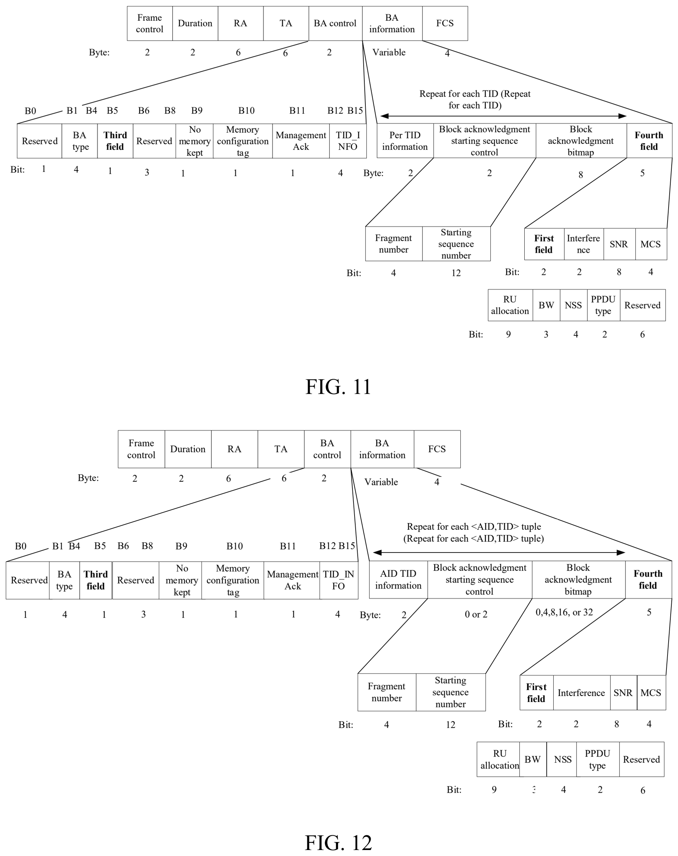

FIG. 11 is an example diagram of a format of a multi-TID BA variant frame according to an embodiment of this application. As shown in FIG. 11, the BA information field includes the fourth field. The fourth field includes the first field. The BA control field includes the third field. The fourth field may include one or more of the following fields: an interference field, an SNR field, an MCS field, an RU allocation field, a BW field, an NSS field, a PPDU type field, or a reserved field. The BA information field may further include one or more of the following fields: a per TID information (per TID info) field, a block acknowledgment starting sequence control field, or a block acknowledgment bitmap field. The block acknowledgment starting sequence control field may include one or more of the following fields: a fragment number field, or a starting sequence number field.

It should be noted that locations of the first field, the third field, and the fourth field in FIG. 11 are merely examples. The locations of the first field, the third field, and the fourth field may be changed. In addition, the presence of the fields in the fourth field and their locations in FIG. 11 may be changed.

FIG. 12 is an example diagram of a format of a multi-STA BA variant frame according to an embodiment of this application. As shown in FIG. 12, the BA information field includes the fourth field. The fourth field includes the first field. The BA control field includes the third field. The fourth field may include one or more of the following fields: an interference field, an SNR field, an MCS field, an RU allocation field, a BW field, an NSS field, a PPDU type field, or a reserved field. The BA information field may further include one or more of the following fields: an AID TID information (AID TID info) field, a block acknowledgment starting sequence control field, or a block acknowledgment bitmap field. The block acknowledgment starting sequence control field may include one or more of the following fields: a fragment number field, or a starting sequence number field.

It should be noted that locations of the first field, the third field, and the fourth field in FIG. 12 are merely examples. The locations of the first field, the third field, and the fourth field may be changed. In addition, the presence of the fields in the fourth field and their locations in FIG. 12 may be changed.

In some embodiments, the first field may belong to an A-control field. It may be understood that A-control has a relatively large quantity of available bits. Therefore, the first field belonging to the A-control field may enable configuration of the first field to be more flexible.

For example, a new variant type of the A-control field may be newly defined to carry the first field. For example, the new variant type of the A-control field may be a ULA control (ULA control) field. The ULA control field is present in a MAC header of a data frame, a null frame, or a management frame.

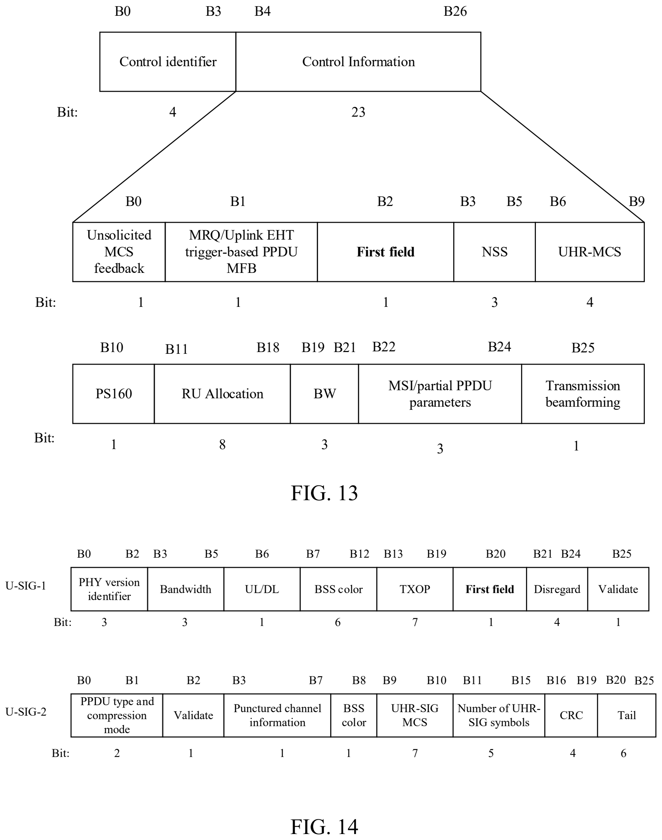

FIG. 13 is a schematic diagram of a format of a ULA control field according to an embodiment of this application. As shown in FIG. 13, the ULA control field may include one or more of the following fields: a control identifier (control ID) field or a control information (control information) field.

The control identifier field may indicate a variant type of the A-control. A value of the control identifier field may be a positive integer. A value of the control identifier field may be, for example, any integer between 10 and 14. For example, a value 10 of the control ID field may indicate a variant type of the ULA control.

The control information field may carry a series of parameters related to link adaptation. The control information field may include the first field.

The control information field may further include one or more of the following fields: an unsolicited MCS feedback (unsolicited MCS feedback, unsolicited MFB) field, an MRQ/uplink EHT trigger-based PPDU MFB (UL EHT TB PPDU MFB) field, an NSS field, a UHR-MCS field, an RU allocation field, a PS160 field, a BW field, an MCS request sequence identifier (MRQ sequence identifier, MSI) or partial PPDU parameters (MSI/partial PPDU parameters) field, or a transmission beamforming field, which are described below.

A value 1 of the unsolicited MFB field indicates that the ELA control field is an unsolicited MFB, and a value 0 indicates that the ELA control field is an MRQ or a solicited MFB.

For the MRQ field, when the value of the unsolicited MFB field is 1, the MRQ field may indicate whether the ELA control is a request or a response. For example, a value 1 of the MRQ field may indicate a request for ELA feedback. For another example, a value 0 of the MRQ field may indicate a response to an ELA request.

For the MRQ field, when the value of the unsolicited MFB field is 0, the MRQ field indicates MFBs for different transmission modes. For example, the value 1 of the MRQ field may indicate that the NSS, EHR-MCS, BW, PS160, and RU allocation fields represent a recommended MFB for an EHT TB PPDU transmitted by the station. For another example, the value 0 of the MRQ field may indicate that the NSS, UHR-MCS, BW, PS160, and RU allocation fields represent a recommended MFB for a PPDU transmitted to the STA.

The NSS field may indicate a recommended quantity of spatial streams.

The EHT-MCS field may indicate a recommended MCS used for a PPDU.

The PS160 field may indicate a primary 160-MHz channel or a secondary 160-MHz channel of the RU or multiple resource unit (multiple resource unit, MRU) allocation when a size of the RU or MRU is less than or equal to $2\times996$ subcarriers; or otherwise, the PS160 subfield, together with the RU allocation subfield, indicates an RU or MRU index.

The RU allocation field may be used to indicate an RU or MRU suggested for use.

The BW field may be used to indicate a bandwidth suggested for use.

For the MSI/partial PPDU parameters field, when a value of the unsolicited MFB field is 0, this field may indicate a sequence number of an MFB request. When the value of the unsolicited MFB field is 1, this field may indicate a type and an encoding type of a PPDU.

The transmission beamforming field may indicate whether a fed-back MFB is estimated based on a beamforming-based PPDU. For example, a value 1 of the transmission beamforming field may indicate that the fed-back MFB is estimated based on the beamforming-based PPDU. For another example, a value 0 of the transmission beamforming field may indicate that the fed-back MFB is not estimated based on the beamforming-based PPDU.

It should be noted that both the presence of the fields included in the control information field and order in which they appear may be changed.

The following describes the first PPDU that carries the first field.

In some embodiments, the first field may be present in a U-SIG field of the first PPDU.

FIG. 14 is a schematic diagram of a format of a U-SIG field in a UHR PPDU according to an embodiment of this application. As shown in FIG. 14, the U-SIG field may include the first field. The U-SIG field may further include one or more of the following fields: a PHY version identifier (PHY version identifier) field, a bandwidth (bandwidth) field, an uplink/-downlink (uplink/downlink, UL/DL) field, a BSS color (BSS color) field, a TXOP field, a disregard (disregard) field, a validate (validate) field, a PPDU type and compression mode (PPDU type and compression mode) field, a punctured channel information (punctured channel information) field, a UHR-SIG MCS field, a number of UHR-SIG symbols (number of UHR-SIG symbols) field, a cyclic redundancy check (cyclic redundancy check, CRC) field, or a tail (tail) field.

It should be noted that, the first field may be used to indicate, notify, or suggest that the first device adjust the length of the data unit to be transmitted. In other words, the first device may directly adjust the length of the data unit to be transmitted according to the indication of the first field; or the first device may independently determine, based on the first field and according to a suggestion provided by the first field, whether to adjust the length of the data unit to be transmitted and/or how to adjust the length of the data unit to be transmitted.

It should be noted that in response to the first device receiving the first field, when the first field indicates that the length of the data unit is required to be adjusted, the first device is required to start and/or complete the adjustment of the length of the data unit as early as possible. In response to the first device receiving the first field, when the first field indicates that it is unnecessary to adjust the length of the data unit, the first device may ignore the first field.

In a case in which the first device is required to adjust the length of the data unit, a method for adjusting the length of the data unit may be related to an implementation. For example, the first device may adjust a quantity of aggregated MPDUs in an A-MPDU. For another example, the first device may adjust a length of a single MPDU or MMPDU by using the dynamic fragmentation technique described above.

In some embodiments, the first device may generate non-uniformly segmented MSDUs, A-MSDUs, or MMPDUs. In a case in which the first device is an HE STA, the HE STA may negotiate the use of different levels of dynamic fragmentation. The levels may be, for example, a level 1, a level 2, or a level 3, which are described below.

Level 1: support for one dynamic fragment that is a non-A-MPDU; and no support for dynamic fragments in an A-MPDU that does not contain an S-MPDU.

Level 2: support for dynamic fragments in an A-MPDU that does not contain an S-MPDU, subject to the following conditions: no more than one dynamic fragment of any given MSDU or A-MSDU in the A-MPDU, and this dynamic fragment is transmitted under a block acknowledgment agreement; and no more than one dynamic fragment of an MMPDU in the A-MPDU.

Level 3: support for dynamic fragments in an A-MPDU that does not contain an S-MPDU, subject to the following conditions: no more than four dynamic fragments of any given MSDU or A-MSDU in the A-MPDU, and these dynamic fragments are transmitted under a block acknowledgment agreement; and no more than one dynamic fragment of an MMPDU in the A-MPDU.

For ease of understanding, the method provided in this application is described with reference to Embodiment 6.

Embodiment 6

Embodiment 6 provides a corresponding technical solution for the scenario shown in FIG. 7.

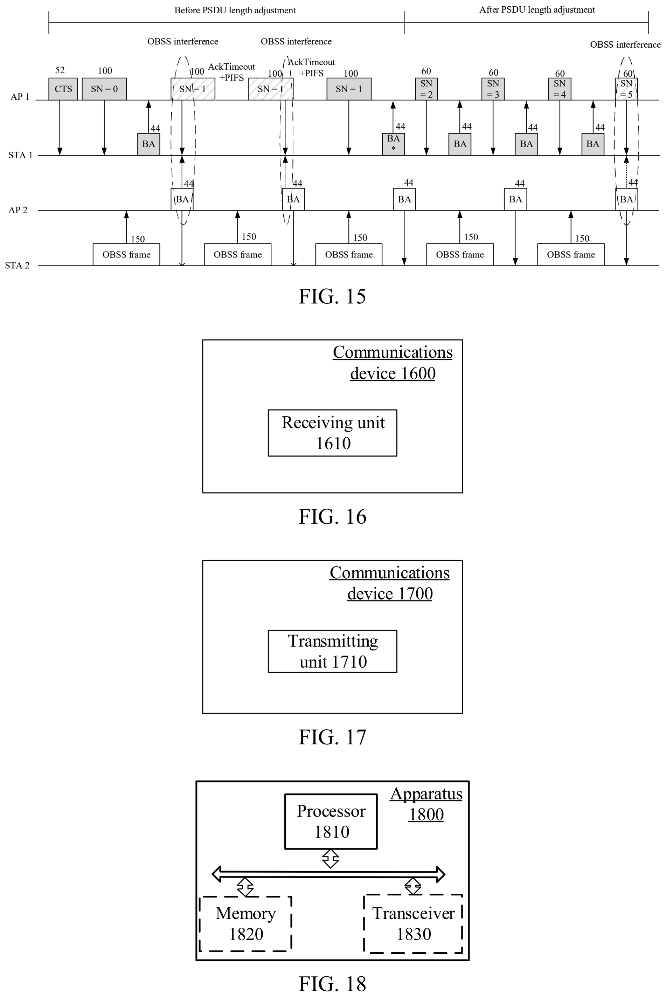

In Embodiment 6, the first field is used to indicate how to adjust a length of a PSDU, and the first frame is a BA frame. A meaning of the first field is whether to adjust the length of the PSDU to 50% of its original length. A timing sequence in which interference is reduced by using a method according to this application is shown in FIG. 15.

First, an AP 1 transmits a CTS to obtain a TXOP for transmitting a series of data frames to a STA 1. After receiving the data frames, the STA 1 immediately responds with a BA frame. At the same time, a STA 2 also transmits a frame to a STA 2, and the STA 2 immediately responds with a BA frame upon reception. It may be seen from FIG. 15 that the BA frame transmitted by the AP 2 is OBSS interference to the STA 1, such that the data frame with SN = 1 transmitted by the AP 1 to the STA 1 experienced a transmission error and was retransmitted. During the retransmission, the STA 1 receives no correct data frame, and therefore does not respond with a BA frame. However, at the same time, the STA 1 may detect that consecutive transmission failures are caused by OBSS interference.

Subsequently, a second retransmission frame of the data frame with SN = 1 that is transmitted by the AP 1 to the STA 1 is not affected by OBSS interference, and is successfully transmitted. To reduce a probability of the same type of interference occurring in subsequent transmissions, the STA 1 transmits a first frame (the BA* frame in FIG. 15) carrying the first field to the AP 1. A value of the first field is 1, that is, the AP 1 is suggested to reduce the length of the PSDU to 50% of its original length.

After receiving the first frame, the AP 1 adjusts the length of the PSDU based on the first field. It can be seen that air interface duration of data frames with SN = 2, 3, 4, and 5 is reduced from 100 $\mu$s to 60 $\mu$s compared with the data frames with SN = 0 and 1 (a length of the preamble (preamble) portion of the PPDU is not adjusted), thereby reducing a probability of occurrence of interference. Accordingly, the AP 1 successfully transmits the data frames with SN = 2, 3, and 4 consecutively, and interference does not occur until the data frame with SN = 5 overlaps with the BA frame transmitted by the AP 2. A transmission failure probability is significantly reduced compared with that before the PSDU length adjustment.

In the scenario shown in FIG. 15, a probability that the data frames transmitted by the AP 1 to the STA 1 are subject to OBSS interference depends on air interface duration of the data frames transmitted by the AP 1 and duration of an interval during which the AP 2 transmits no frames. In FIG. 15, a probability of OBSS interference may be:

$$\text{Probability of OBSS interference} = \frac{\text{Air interface duration of the data frames transmitted by the AP 1}}{\text{Duration of an interval during which the AP 2 transmits no frames}}.$$

Before the length of the PSDU is adjusted, the probability of OBSS interference is equal to 100us/(150us + 2 $\times$ 16 us) = 55%.

After the length of the PSDU is adjusted, the probability of OBSS interference is equal to 60 us/(150 us + 2 $\times$ 16 us) = 33%.

It can be seen that the probability of OBSS interference after the PSDU length adjustment is reduced from 55% to 33%. Therefore, by means of the first field provided herein, the length of the PSDU may be effectively adjusted, thereby effectively reducing the probability of occurrence of OBSS interference, reducing a packet loss rate, and improving link reliability.

In the related technology, transmitted information indicates whether there is interference or specific information about interference signals, such an indication is not explicit or incurs large bit overheads. However, information transmitted in this solution is information related to PSDU or PPDU length adjustment, which requires fewer bits and can also accurately indicate how to perform the adjustment, thereby reducing the probability of occurrence of interference.

The foregoing describes the method embodiments of this application in detail. The following describes apparatus embodiments of this application in detail. It should be understood that the descriptions of the method embodiments correspond to descriptions of the apparatus embodiments, and therefore, for parts that are not described in detail, reference may be made to the foregoing method embodiments.

FIG. 16 is a schematic structural diagram of a communications device 1600 according to an embodiment of this application. The communications device 1600 may include a receiving unit 1610.

The receiving unit 1610 is configured to receive a first field, where the first field is used to instruct the first device to adjust a length of a data unit to be transmitted.

In some embodiments, the data unit includes one or more of the following: a PSDU or a PPDU.

In some embodiments, the first field is used to indicate one or more of the following information: whether to adjust the length of the data unit; or

a first length of the data unit after the adjustment.

In some embodiments, the first length is a maximum length of the data unit.

In some embodiments, the first length is determined based on a first value and a second value of the first field, and the second value satisfies one or more of the following: the second value being determined based on a value of a second field; the second value being determined based on a value of a static physical layer characteristic parameter; or the second value being determined based on a length of a data unit historically transmitted by the first device.

In some embodiments, a value of the first field is A, the second value is B, and the first length C satisfies:

$$C = \frac{B}{2^A}.$$

In some embodiments, the second field is located in a capability element.

In some embodiments, the second field includes a maximum aggregate medium access control protocol data unit length exponent field.

In some embodiments, the capability element includes a capability element of a first type, and the first length is a length of a data unit of the first type.

In some embodiments, the first type includes one or more of the following: a UHR, an EHT, an HE, a VHT, or an HT.

In some embodiments, the static physical layer characteristic parameter is used to indicate a maximum length of a data unit that a physical layer is capable of supporting for reception and/or transmission.

In some embodiments, the static physical layer characteristic parameter includes: aPSDUMaxLength and/or aPPDUMaxTime.

In some embodiments, a value of the first field is A, and the first length C satisfies: C = A; or C = $2^{(13+A)}$ - 1.

In some embodiments, the first field belongs to a first frame, and the first frame includes one or more of the following: a BA frame, a data frame, a null frame, or a management frame.

In some embodiments, the first field belongs to a BA control field.

In some embodiments, the first field belongs to a BA information field.

In some embodiments, a BA control field in the BA frame includes a third field, and the third field is used to indicate whether the first field is present in the BA information field.

In some embodiments, the BA frame is a compressed BA variant frame, a multi-traffic identifier BA variant frame, or a multi-station BA variant frame.

In some embodiments, the first field belongs to an A-control field.

In some embodiments, the first field belongs to a first PPDU.

In some embodiments, the first field being used to instruct the first device to adjust the length of the data unit to be transmitted includes: the first field being used to suggest that the first device adjust the length of the data unit to be transmitted.

In an optional embodiment, the receiving unit 1610 may be a transceiver 1830. The communications device 1600 may further include a processor 1810 and a memory 1820, which are specifically shown in FIG. 18.

FIG. 17 is a schematic structural diagram of a communications device 1700 according to an embodiment of this application. The communications device 1700 may include a transmitting unit 1710.

The transmitting unit 1710 is configured to transmit a first field to a first device, where the first field is used to instruct the first device to adjust a length of a data unit to be transmitted.

In some embodiments, the data unit includes one or more of the following: a PSDU or a PPDU.

In some embodiments, the first field is used to indicate one or more of the following information: whether to adjust the length of the data unit; or a first length of the data unit after the adjustment.

In some embodiments, the first length is a maximum length of the data unit.

In some embodiments, the first length is determined based on a first value and a second value of the first field, and the second value satisfies one or more of the following: the second value being determined based on a value of a second field; the second value being determined based on a value of a static physical layer characteristic parameter; or the second value being determined based on a length of a data unit historically transmitted by the first device.

In some embodiments, a value of the first field is A, the second value is B, and the first length C satisfies:

$$C = \frac{B}{2^A}.$$

In some embodiments, the second field is located in a capability element.

In some embodiments, the second field includes a maximum aggregate medium access control protocol data unit length exponent field.

In some embodiments, the capability element includes a capability element of a first type, and the first length is a length of a data unit of the first type.

In some embodiments, the first type includes one or more of the following: a UHR, an EHT, an HE, a VHT, or an HT.

In some embodiments, the static physical layer characteristic parameter is used to indicate a maximum length of a data unit that a physical layer is capable of supporting for reception and/or transmission.

In some embodiments, the static physical layer characteristic parameter includes: aPSDUMaxLength and/or aPPDUMaxTime.

In some embodiments, a value of the first field is A, and the first length C satisfies: C = A; or C = $2^{(13+A)}$ - 1.

In some embodiments, the first field belongs to a first frame, and the first frame includes one or more of the following: a block acknowledgment BA frame, a data frame, a null frame, or a management frame.

In some embodiments, the first field belongs to a BA control field.

In some embodiments, the first field belongs to a BA information field.

In some embodiments, a BA control field in the BA frame includes a third field, and the third field is used to indicate whether the first field is present in the BA information field.

In some embodiments, the BA frame is a compressed BA variant frame, a multi-traffic identifier BA variant frame, or a multi-station BA variant frame.

In some embodiments, the first field belongs to an A-control field.

In some embodiments, the first field belongs to a first PPDU.

In some embodiments, the first field being used to instruct the first device to adjust the length of the data unit to be transmitted includes: the first field being used to suggest that the first device adjust the length of the data unit to be transmitted.

In an optional embodiment, the transmitting unit 1710 may be a transceiver 1830. The communications device 1700 may further include a processor 1810 and a memory 1820, which are specifically shown in FIG. 18.

FIG. 18 is a schematic structural diagram of an apparatus for communication according to an embodiment of this application. Dashed lines in FIG. 18 indicate that a unit or module is optional. The apparatus 1800 may be configured to implement the methods described in the foregoing method embodiments. The apparatus 1800 may be a chip or a communications device.

The apparatus 1800 may include one or more processors 1810. The processor 1810 may support the apparatus 1800 in implementing the methods described in the foregoing method embodiments. The processor 1810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1800 may further include one or more memories 1820. The memory 1820 stores a program, where the program may be executed by the processor 1810, to cause the processor 1810 to execute the methods described in the method embodiments. The memory 1820 may be separated from or integrated into the processor 1810.

The apparatus 1800 may further include a transceiver 1830. The processor 1810 may communicate with another device or chip by using the transceiver 1830. For example, the processor 1810 may transmit data to and receive data from another device or chip through the transceiver 1830.

An embodiment of this application further provides a computer-readable storage medium for storing a program. The computer-readable storage medium may be applied to the communications device provided in embodiments of this application, and the program causes a computer to perform the methods performed by the communications device in various embodiments of this application.

An embodiment of this application further provides a computer program product. The computer program product includes a program. The computer program product may be applied to the communications device provided in embodiments of this application, and the program causes a computer to perform the methods performed by the communications device in various embodiments of this application.

An embodiment of this application further provides a computer program. The computer program may be applied to the communications device provided in embodiments of this application, and the computer program causes a computer to execute the methods executed by the communications device in embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In this embodiment of this application, a "field" may also be referred to as a "domain (field)", a "subdomain (subfield)", or a "subfield (subfield)". One field may occupy one or more bytes (byte/octet), or one field may occupy one or more bits (bit).

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by prestoring corresponding code, tables, or other forms that may be used to indicate related information in devices (for example, including an AP and an STA), and a specific implementation thereof is not limited in this application. For example, being predefined may refer to being defined in a protocol.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, the "include" may refer to direct inclusion, or may refer to indirect inclusion. Optionally, the term "include" mentioned in embodiments of this application may be replaced with "indicate" or "be used to determine". For example, A including B may be replaced with that A indicates B, or A is used to determine B.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In embodiments of this application, the "protocol" may refer to a standard protocol in the communications field, and may include, for example, a Wi-Fi protocol, and a related protocol applied to a future Wi-Fi communications system, which is not limited in this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A wireless communication method, comprising:

receiving, by a first device, a first field,
wherein the first field is used to instruct the first device to adjust a length of a data unit to be transmitted.

**2.** The method according to claim 1, wherein the data unit comprises one or more of following: a physical layer service data unit PSDU or a physical layer protocol data unit PPDU.

**3.** The method according to claim 1 or 2, wherein the first field is used to indicate one or more of following information:

whether to adjust the length of the data unit; or
a first length of the data unit after the adjustment.

**4.** The method according to claim 3, wherein the first length is a maximum length of the data unit.

**5.** The method according to claim 3 or 4, wherein the first length is determined based on a first value and a second value of the first field, and the second value satisfies one or more of following:

the second value being determined based on a value of a second field;
the second value being determined based on a value of a static physical layer characteristic parameter; or
the second value being determined based on a length of a data unit historically transmitted by the first device.

**6.** The method according to claim 5, wherein a value of the first field is A, the second value is B, and the first length C satisfies: $C = \dfrac{B}{2^A}$.

**7.** The method according to claim 5 or 6, wherein the second field is located in a capability element.

**8.** The method according to claim 7, wherein the second field comprises a maximum aggregate medium access control protocol data unit length exponent field.

**9.** The method according to claim 7 or 8, wherein the capability element comprises a capability element of a first type, and the first length is a length of a data unit of the first type.

**10.** The method according to claim 9, wherein the first type comprises one or more of following: ultra-high reliability UHR, extremely high throughput EHT, high efficiency HE, very high-throughput VHT, or high throughput HT.

**11.** The method according to claim 5 or 6, wherein the static physical layer characteristic parameter is used to indicate a maximum length of a data unit that a physical layer is capable of supporting reception and/or transmission.

**12.** The method according to claim 11, wherein the static physical layer characteristic parameter comprises: a PSDU maximum length aPSDUMaxLength and/or a PPDU maximum time period aPPDUMaxTime.

**13.** The method according to claim 3 or 4, wherein a value of the first field is A, and the first length C satisfies: C = A; or C = $2^{(13+A)} - 1$.

**14.** The method according to any one of claims 1 to 13, wherein the first field belongs to a first frame, and the first frame comprises one or more of following: a block acknowledgment BA frame, a data frame, a null frame, or a management frame.

**15.** The method according to claim 14, wherein the first field belongs to a BA control field.

**16.** The method according to claim 14 or 15, wherein the first field belongs to a BA information field.

**17.** The method according to claim 16, wherein a BA control field in the BA frame comprises a third field, and the third field is used to indicate whether the first field is present in the BA information field.

**18.** The method according to any one of claims 14 to 17, wherein the BA frame is a compressed BA variant frame, a multi-traffic identifier BA variant frame, or a multi-station BA variant frame.

**19.** The method according to claim 14, wherein the first field belongs to an A-control A-control field.

**20.** The method according to any one of claims 1 to 13, wherein the first field belongs to a first PPDU.

21. The method according to any one of claims 1 to 20, wherein the first field being used to instruct the first device to adjust the length of the data unit to be transmitted comprises:
the first field being used to suggest that the first device adjust the length of the data unit to be transmitted.

22. A wireless communication method, comprising:

transmitting, by a second device, a first field to a first device,
wherein the first field is used to instruct the first device to adjust a length of a data unit to be transmitted.

23. The method according to claim 22, wherein the data unit comprises one or more of following: a physical layer service data unit PSDU or a physical layer protocol data unit PPDU.

24. The method according to claim 22 or 23, wherein the first field is used to indicate one or more of following information:

whether to adjust the length of the data unit; or
a first length of the data unit after the adjustment.

25. The method according to claim 24, wherein the first length is a maximum length of the data unit.

26. The method according to claim 24 or 25, wherein the first length is determined based on a first value and a second value of the first field, and the second value satisfies one or more of following:

the second value being determined based on a value of a second field;
the second value being determined based on a value of a static physical layer characteristic parameter; or
the second value being determined based on a length of a data unit historically transmitted by the first device.

27. The method according to claim 26, wherein a value of the first field is A, the second value is B, and the first length C satisfies: $C = \dfrac{B}{2^A}$.

28. The method according to claim 26 or 27, wherein the second field is located in a capability element.

29. The method according to claim 28, wherein the second field comprises a maximum aggregate medium access control protocol data unit length exponent field.

30. The method according to claim 28 or 29, wherein the capability element comprises a capability element of a first type, and the first length is a length of a data unit of the first type.

31. The method according to claim 30, wherein the first type comprises one or more of following: ultra-high reliability UHR, extremely high throughput EHT, high efficiency HE, very high-throughput VHT, or high throughput HT.

32. The method according to claim 26 or 27, wherein the static physical layer characteristic parameter is used to indicate a maximum length of a data unit that a physical layer is capable of supporting reception and/or transmission.

33. The method according to claim 32, wherein the static physical layer characteristic parameter comprises: a PSDU maximum length aPSDUMaxLength and/or a PPDU maximum time period aPPDUMaxTime.

34. The method according to claim 24 or 25, wherein a value of the first field is A, and the first length C satisfies: C = A; or C $= 2^{(13+A)} - 1$.

35. The method according to any one of claims 22 to 34, wherein the first field belongs to a first frame, and the first frame comprises one or more of following: a block acknowledgment BA frame, a data frame, a null frame, or a management frame.

36. The method according to claim 35, wherein the first field belongs to a BA control field.

37. The method according to claim 35 or 36, wherein the first field belongs to a BA information field.

38. The method according to claim 37, wherein a BA control field in the BA frame comprises a third field, and the third field is used to indicate whether the first field is present in the BA information field.

39. The method according to any one of claims 35 to 38, wherein the BA frame is a compressed BA variant frame, a multi-traffic identifier BA variant frame, or a multi-station BA variant frame.

40. The method according to claim 35, wherein the first field belongs to an A-control A-control field.

41. The method according to any one of claims 22 to 34, wherein the first field belongs to a first PPDU.

42. The method according to any one of claims 22 to 41, wherein the first field being used to instruct the first device to adjust the length of the data unit to be transmitted comprises:
the first field being used to suggest that the first device adjust the length of the data unit to be transmitted.

43. A communications device, wherein the communications device is a first device, and the communications device comprises:

a receiving unit, configured to receive a first field,
wherein the first field is used to instruct the first device to adjust a length of a data unit to be transmitted.

44. The device according to claim 43, wherein the data unit comprises one or more of following: a physical layer service data unit PSDU or a physical layer protocol data unit PPDU.

45. The device according to claim 43 or 44, wherein the first field is used to indicate one or more of following information:

whether to adjust the length of the data unit; or
a first length of the data unit after the adjustment.

46. The device according to claim 45, wherein the first length is a maximum length of the data unit.

47. The device according to claim 45 or 46, wherein the first length is determined based on a first value and a second value of the first field, and the second value satisfies one or more of following:

the second value being determined based on a value of a second field;
the second value being determined based on a value of a static physical layer characteristic parameter; or
the second value being determined based on a length of a data unit historically transmitted by the first device.

48. The device according to claim 47, wherein a value of the first field is A, the second value is B, and the first length C satisfies: $C = \dfrac{B}{2^A}$ .

49. The device according to claim 47 or 48, wherein the second field is located in a capability element.

50. The device according to claim 48, wherein the second field comprises a maximum aggregate medium access control protocol data unit length exponent field.

51. The device according to claim 48 or 50, wherein the capability element comprises a capability element of a first type, and the first length is a length of a data unit of the first type.

52. The device according to claim 51, wherein the first type comprises one or more of following: ultra-high reliability UHR, extremely high throughput EHT, high efficiency HE, very high-throughput VHT, or high throughput HT.

53. The device according to claim 47 or 48, wherein the static physical layer characteristic parameter is used to indicate a maximum length of a data unit that a physical layer is capable of supporting for reception and/or transmission.

54. The device according to claim 53, wherein the static physical layer characteristic parameter comprises: a PSDU maximum length aPSDUMaxLength and/or a PPDU maximum time period aPPDUMaxTime.

**55.** The device according to claim 45 or 46, wherein a value of the first field is A, and the first length C satisfies: C = A; or C = $2^{(13+A)} - 1$.

**56.** The device according to any one of claims 43 to 55, wherein the first field belongs to a first frame, and the first frame comprises one or more of following: a block acknowledgment BA frame, a data frame, a null frame, or a management frame.

**57.** The device according to claim 56, wherein the first field belongs to a BA control field.

**58.** The device according to claim 56 or 57, wherein the first field belongs to a BA information field.

**59.** The device according to claim 58, wherein a BA control field in the BA frame comprises a third field, and the third field is used to indicate whether the first field is present in the BA information field.

**60.** The device according to any one of claims 56 to 59, wherein the BA frame is a compressed BA variant frame, a multi-traffic identifier BA variant frame, or a multi-station BA variant frame.

**61.** The device according to claim 56, wherein the first field belongs to an A-control A-control field.

**62.** The device according to any one of claims 43 to 55, wherein the first field belongs to a first PPDU.

**63.** The device according to any one of claims 43 to 62, wherein the first field being used to instruct the first device to adjust the length of the data unit to be transmitted comprises:
the first field being used to suggest that the first device adjust the length of the data unit to be transmitted.

**64.** A communications device, wherein the communications device is a second device, and the communications device comprises:

a transmitting unit, configured to transmit a first field to a first device,
wherein the first field is used to instruct the first device to adjust a length of a data unit to be transmitted.

**65.** The device according to claim 64, wherein the data unit comprises one or more of following: a physical layer service data unit PSDU or a physical layer protocol data unit PPDU.

**66.** The device according to claim 64 or 65, wherein the first field is used to indicate one or more of following information:

whether to adjust the length of the data unit; or
a first length of the data unit after the adjustment.

**67.** The device according to claim 66, wherein the first length is a maximum length of the data unit.

**68.** The device according to claim 66 or 67, wherein the first length is determined based on a first value and a second value of the first field, and the second value satisfies one or more of following:

the second value being determined based on a value of a second field;
the second value being determined based on a value of a static physical layer characteristic parameter; or
the second value being determined based on a length of a data unit historically transmitted by the first device.

**69.** The device according to claim 68, wherein a value of the first field is A, the second value is B, and the first length C satisfies: $C = \dfrac{B}{2^A}$.

**70.** The device according to claim 68 or 69, wherein the second field is located in a capability element.

**71.** The device according to claim 70, wherein the second field comprises a maximum aggregate medium access control protocol data unit length exponent field.

**72.** The device according to claim 70 or 71, wherein the capability element comprises a capability element of a first type, and the first length is a length of a data unit of the first type.

73. The device according to claim 72, wherein the first type comprises one or more of following: ultra-high reliability UHR, extremely high throughput EHT, high efficiency HE, very high-throughput VHT, or high throughput HT.

74. The device according to claim 68 or 69, wherein the static physical layer characteristic parameter is used to indicate a maximum length of a data unit that a physical layer is capable of supporting for reception and/or transmission.

75. The device according to claim 74, wherein the static physical layer characteristic parameter comprises: a PSDU maximum length aPSDUMaxLength and/or a PPDU maximum time period aPPDUMaxTime.

76. The device according to claim 66 or 67, wherein a value of the first field is A, and the first length C satisfies: C = A; or C = $2^{(13+A)} - 1$.

77. The device according to any one of claims 64 to 76, wherein the first field belongs to a first frame, and the first frame comprises one or more of following: a block acknowledgment BA frame, a data frame, a null frame, or a management frame.

78. The device according to claim 77, wherein the first field belongs to a BA control field.

79. The device according to claim 77 or 78, wherein the first field belongs to a BA information field.

80. The device according to claim 79, wherein a BA control field in the BA frame comprises a third field, and the third field is used to indicate whether the first field is present in the BA information field.

81. The device according to any one of claims 77 to 80, wherein the BA frame is a compressed BA variant frame, a multi-traffic identifier BA variant frame, or a multi-station BA variant frame.

82. The device according to claim 77, wherein the first field belongs to an A-control A-control field.

83. The device according to any one of claims 64 to 76, wherein the first field belongs to a first PPDU.

84. The device according to any one of claims 64 to 83, wherein the first field being used to instruct the first device to adjust the length of the data unit to be transmitted comprises:
the first field being used to suggest that the first device adjust the length of the data unit to be transmitted.

85. A communications device, comprising a memory and a processor, wherein the memory is configured to store a program, and the processor is configured to invoke the program in the memory to cause the communications device to execute the method according to any one of claims 1 to 42.

86. An apparatus, comprising a processor configured to invoke a program from a memory, to cause the apparatus to execute the method according to any one of claims 1 to 42.

87. A chip, comprising a processor, configured to invoke a program from a memory to cause a device installed with the chip to execute the method according to any one of claims 1 to 42.

88. A computer-readable storage medium, wherein the computer-readable storage medium stores a program, and the program causes a computer to execute the method according to any one of claims 1 to 42.

89. A computer program product, comprising a program that causes a computer to execute the method according to any one of claims 1 to 42.

90. A computer program, wherein the computer program causes a computer to execute the method according to any one of claims 1 to 42.

100

FIG. 1

FIG. 2

| Frame control | Duration | RA | TA | BA control | BA information | FCS |
|---|---|---|---|---|---|---|
| 2 | 2 | 6 | 6 | 2 | Variable | 4 |

Byte:

| B0 | B1 B4 | B5 B8 | B9 | B10 | B11 | B12 B15 |
|---|---|---|---|---|---|---|
| Reserved | BA type | Reserved | No memory kept | Memory configuration tag | Management Ack | TID_INFO |
| 1 | 4 | 4 | 1 | 1 | 1 | 4 |

Bit:

FIG. 3

MAC header

| Frame control | Duration/ID | Address 1 | Address 2 | Address 3 | Sequence control | Address 4 | QoS control | HT control | Frame body | FCS |
|---|---|---|---|---|---|---|---|---|---|---|
| 2 | 2 | 6 | 0 or 6 | 0 or 6 | 0 or 6 | 0 or 6 | 0 or 6 | 0 or 6 | Variable | 4 |

Byte:

FIG. 4

| Control list | Padding |
|---|---|
| Variable | 0 or variable |

Bit:

FIG. 5A

| B0 | B3 |
|---|---|
| Control identifier | Control information |
| 4 | Variable |

Bit:

FIG. 5B

| B0 | | | | B3 | B4 | | | | | | | | | B29 |
|---|---|---|---|---|---|---|---|---|---|---|---|---|---|---|
| Control identifier (=2) | | | | | Control information | | | | | | | | | |

Bit:  4  26

| B0 | B1 | | B2 B4 | B5 | B8 | B9 | | B16 |
|---|---|---|---|---|---|---|---|---|
| Unsolicited MCS feedback | MRQ/Uplink EHT trigger-based PPDU MFB | | NSS | UHR-MCS | | RU allocation | | |

Bit:  1  1  3  4  8

| B17 | B18 | B20 | B21 | | B23 | B24 | B25 |
|---|---|---|---|---|---|---|---|
| PS160 | BW | | MSI/partial PPDU parameters | | | Transmission beamforming | HLA/ELA |

Bit:  1  3  3  1  1

FIG. 5C

FIG. 6

FIG. 7

FIG. 8

| Frame control | Duration | RA | TA | BA control | BA information | FCS |
|---|---|---|---|---|---|---|

Byte: 2 2 6 6 2 Variable 4

B0    B1   B4    B5    B6   B8    B9      B10       B11     B12    B15

| Reserved | BA type | **First field** | Reserved | No memory kept | Memory configuration tag | Management Ack | TID_INFO |
|---|---|---|---|---|---|---|---|

Bit: 1 4 1 3 1 1 1 4

## FIG. 9

| Frame control | Duration | RA | TA | BA control | BA information | FCS |
|---|---|---|---|---|---|---|

Byte: 2 2 6 6 2 Variable 4

B0   B1   B4   B5   B6   B8   B9    B10    B11   B12   B15

| Reserved | BA type | **Third field** | Reserved | No memory kept | Memory configuration tag | Management Ack | TID_INFO |
|---|---|---|---|---|---|---|---|

Bit: 1 4 1 3 1 1 1 4

| Block acknowledgment starting sequence control | Block acknowledgment bitmap | **Fourth field** |
|---|---|---|

Byte: 2     8 or 32     5

| Fragment number | Starting sequence number |
|---|---|

Bit: 4 12

| **First field** | Interference | SNR | MCS |
|---|---|---|---|

Bit: 2 2 8 4

| RU allocation | BW | NSS | PPDU type | Reserved |
|---|---|---|---|---|

Bit: 9 3 4 2 6

## FIG. 10

| Frame control | Duration | RA | TA | BA control | BA information | FCS |
|---|---|---|---|---|---|---|
| Byte: 2 | 2 | 6 | 6 | 2 | Variable | 4 |

Repeat for each TID (Repeat for each TID)

| B0 | B1 B4 | B5 | B6 B8 | B9 | B10 | B11 | B12 B15 |
|---|---|---|---|---|---|---|---|
| Reserved | BA type | **Third field** | Reserved | No memory kept | Memory configuration tag | Management Ack | TID_INFO |
| Bit: 1 | 4 | 1 | 3 | 1 | 1 | 1 | 4 |

| Per TID information | Block acknowledgment starting sequence control | Block acknowledgment bitmap | **Fourth field** |
|---|---|---|---|
| Byte: 2 | 2 | 8 | 5 |

| Fragment number | Starting sequence number |
|---|---|
| Bit: 4 | 12 |

| **First field** | Interference | SNR | MCS |
|---|---|---|---|
| Bit: 2 | 2 | 8 | 4 |

| RU allocation | BW | NSS | PPDU type | Reserved |
|---|---|---|---|---|
| Bit: 9 | 3 | 4 | 2 | 6 |

## FIG. 11

| Frame control | Duration | RA | TA | BA control | BA information | FCS |
|---|---|---|---|---|---|---|
| Byte: 2 | 2 | 6 | 6 | 2 | Variable | 4 |

Repeat for each <AID,TID> tuple (Repeat for each <AID,TID> tuple)

| B0 | B1 B4 | B5 | B6 B8 | B9 | B10 | B11 | B12 B15 |
|---|---|---|---|---|---|---|---|
| Reserved | BA type | **Third field** | Reserved | No memory kept | Memory configuration tag | Management Ack | TID_INFO |
| 1 | 4 | 1 | 3 | 1 | 1 | 1 | 4 |

| AID TID information | Block acknowledgment starting sequence control | Block acknowledgment bitmap | **Fourth field** |
|---|---|---|---|
| Byte: 2 | 0 or 2 | 0,4,8,16, or 32 | 5 |

| Fragment number | Starting sequence number |
|---|---|
| Bit: 4 | 12 |

| **First field** | Interference | SNR | MCS |
|---|---|---|---|
| Bit: 2 | 2 | 8 | 4 |

| RU allocation | BW | NSS | PPDU type | Reserved |
|---|---|---|---|---|
| Bit: 9 | 3 | 4 | 2 | 6 |

## FIG. 12

| B0 | B3 | B4 | B26 |
|---|---|---|---|
| Control identifier | | Control Information | |

Bit: 4 — 23

| B0 | B1 | B2 | B3 | B5 | B6 | B9 |
|---|---|---|---|---|---|---|
| Unsolicited MCS feedback | MRQ/Uplink EHT trigger-based PPDU MFB | **First field** | NSS | | UHR-MCS | |

Bit: 1 — 1 — 1 — 3 — 4

| B10 | B11 | B18 | B19 | B21 | B22 | B24 | B25 |
|---|---|---|---|---|---|---|---|
| PS160 | RU Allocation | | BW | | MSI/partial PPDU parameters | | Transmission beamforming |

Bit: 1 — 8 — 3 — 3 — 1

## FIG. 13

U-SIG-1

| B0 | B2 | B3 | B5 | B6 | B7 | B12 | B13 | B19 | B20 | B21 | B24 | B25 |
|---|---|---|---|---|---|---|---|---|---|---|---|---|
| PHY version identifier | | Bandwidth | | UL/DL | BSS color | | TXOP | | **First field** | Disregard | | Validate |

Bit: 3 — 3 — 1 — 6 — 7 — 1 — 4 — 1

U-SIG-2

| B0 | B1 | B2 | B3 | B7 | B8 | B9 | B10 | B11 | B15 | B16 | B19 | B20 | B25 |
|---|---|---|---|---|---|---|---|---|---|---|---|---|---|
| PPDU type and compression mode | | Validate | Punctured channel information | | BSS color | UHR-SIG MCS | | Number of UHR-SIG symbols | | CRC | | Tail | |

Bit: 2 — 1 — 1 — 1 — 7 — 5 — 4 — 6

## FIG. 14

FIG. 15

FIG. 16

FIG. 17

FIG. 18

## INTERNATIONAL SEARCH REPORT

| | International application No. |
|---|---|
| | **PCT/CN2023/124339** |

### A. CLASSIFICATION OF SUBJECT MATTER

H04W28/04(2009.01)i

According to International Patent Classification (IPC) or to both national classification and IPC

### B. FIELDS SEARCHED

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, ENTXTC, ENTXT, IEEE: 调整, 增大, 减小, 调节, 更新, 更改, PPDU, PSDU, 数据单元, 长度, 时长, BA, 干扰, adjust+, updat+, chang+, short+, reduc+, alter+, PPDU, PSDU, data unit, length+, time, BA, interfere+

### C. DOCUMENTS CONSIDERED TO BE RELEVANT

| Category* | Citation of document, with indication, where appropriate, of the relevant passages | Relevant to claim No. |
|---|---|---|
| X | CN 109155688 A (MARVELL WORLD TRADE LTD.) 04 January 2019 (2019-01-04) description, paragraphs 0083-0099 | 1-4, 13-25, 34-46, 55-67, 76-90 |
| A | CN 102316013 A (HANGZHOU H3C TECHNOLOGIES CO., LTD.) 11 January 2012 (2012-01-11) entire document | 1-90 |
| A | CN 116671239 A (GUANGDONG OPPO MOBILE TELECOMMUNICATIONS CORP., LTD.) 29 August 2023 (2023-08-29) entire document | 1-90 |
| A | CN 113207189 A (MEDIATEK SINGAPORE PTE. LTD.) 03 August 2021 (2021-08-03) entire document | 1-90 |
| A | WO 2023010455 A1 (GUANGDONG OPPO MOBILE TELECOMMUNICATIONS CORP., LTD.) 09 February 2023 (2023-02-09) entire document | 1-90 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 July 2024** | **03 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/124339**

| Patent document cited in search report | | | Publication date (day/month/year) | Patent family member(s) | | | Publication date (day/month/year) |
|---|---|---|---|---|---|---|---|
| CN | 109155688 | A | 04 January 2019 | EP | 3443696 | A1 | 20 February 2019 |
| | | | | WO | 2017180986 | A1 | 19 October 2017 |
| | | | | US | 2017303164 | A1 | 19 October 2017 |
| | | | | US | 10231148 | B2 | 12 March 2019 |
| CN | 102316013 | A | 11 January 2012 | None | | | |
| CN | 116671239 | A | 29 August 2023 | None | | | |
| CN | 113207189 | A | 03 August 2021 | None | | | |
| WO | 2023010455 | A1 | 09 February 2023 | None | | | |

Form PCT/ISA/210 (patent family annex) (July 2022)